# EUROPEAN PATENT APPLICATION

(11) **EP 4 571 446 A1**
(43) Date of publication of application: **18.06.2025**
(21) Application number: 24219062.7
(22) Date of filing: 11.12.2024
(51) Int. Cl.: G05D 1/225, G05D 1/227, G05D 101/15, G05D 101/00, G05D 105/22, G05D 109/10, B60W 60/00

(54) **SEMI-AUTONOMOUS OR PSEUDO-AUTONOMOUS DRIVING**

(30) Priority: 12.12.2023 US 202318537006
(71) Applicant: Volvo Car Corporation, 405 31 Göteborg (SE)
(72) Inventor: ERIKSSON, Robert Gunnar, 40531 Göteborg (SE); FORSSELL, Jonas, 40531 Göteborg (SE); HÄRSJÖ, Joachim John David, 40531 Göteborg (SE)
(74) Representative: Maiwald GmbH

(57) **Abstract**

Systems/techniques that facilitate semi-autonomous or pseudo-autonomous driving are provided. In various embodiments, a system onboard a vehicle can discover one or more computing devices that are physically remote from the vehicle but that are within electronic communication range of the vehicle. In various aspects, the system can establish a first remote control link between the vehicle and a first computing device of the one or more computing devices, such that steering, accelerating, or braking of the vehicle are operated autonomously or by a physical driver prior to establishment of the first remote control link, and such that the steering, accelerating, or braking of the vehicle are remotely operated by the first computing device after establishment of the first remote control link.

## Description

### TECHNICAL FIELD

The subject disclosure relates generally to vehicles, and more specifically to semi-autonomous or pseudo-autonomous driving.

### BACKGROUND

Many modern vehicles implement autonomous driving capabilities. Unfortunately, such autonomous driving capabilities currently offer limited functionality.

Accordingly, systems or techniques that can address one or more of these technical problems can be desirable.

### SUMMARY

The following presents a summary to provide a basic understanding of one or more embodiments of the invention. This summary is not intended to identify key or critical elements, or delineate any scope of the particular embodiments or any scope of the claims. Its sole purpose is to present concepts in a simplified form as a prelude to the more detailed description that is presented later. In one or more embodiments described herein, devices, systems, computer-implemented methods, apparatus or computer program products that facilitate semi-autonomous or pseudo-autonomous driving are described.

According to one or more embodiments, a system is provided. The system can comprise a vehicle. In various aspects, the system can further comprise a non-transitory computer-readable memory onboard the vehicle that can store computer-executable components. The system can yet further comprise a processor onboard the vehicle that can be operably coupled to the non-transitory computer-readable memory and that can execute the computer-executable components stored in the non-transitory computer-readable memory. In various embodiments, the computer-executable components can comprise a search component that can discover one or more computing devices that are physically remote from the vehicle but that are within electronic communication range of the vehicle. In various aspects, the computer-executable components can comprise a control component that can establish a first remote control link between the vehicle and a first computing device of the one or more computing devices, such that steering, accelerating, or braking of the vehicle are operated autonomously or by a physical driver prior to establishment of the first remote control link, and such that the steering, accelerating, or braking of the vehicle are remotely operated by the first computing device after establishment of the first remote control link.

According to one or more embodiments, the above-described system can be implemented as a computer-implemented method or a computer program product.

### DESCRIPTION OF THE DRAWINGS

FIG. 1 illustrates a block diagram of an example, non-limiting system that facilitates semi-autonomous or pseudo-autonomous driving in accordance with one or more embodiments described herein.
FIG. 2 illustrates an example, non-limiting block diagram showing various vehicle sensors and various driving actuators in accordance with one or more embodiments described herein.
FIG. 3 illustrates a block diagram of an example, non-limiting system including a wireless device discovery procedure that facilitates semi-autonomous or pseudo-autonomous driving in accordance with one or more embodiments described herein.
FIG. 4 illustrates a block diagram of an example, non-limiting system including a remote control link that facilitates semi-autonomous or pseudo-autonomous driving in accordance with one or more embodiments described herein.
FIG. 5 illustrates a block diagram of an example, non-limiting system including a link trigger that facilitates semi-autonomous or pseudo-autonomous driving in accordance with one or more embodiments described herein.
FIGs. 6-10 illustrate flow diagrams of example, non-limiting computer-implemented methods that facilitate triggering or initiation of semi-autonomous or pseudo-autonomous driving in accordance with one or more embodiments described herein.
FIG. 11 illustrates a block diagram of an example, non-limiting system including a link monitoring procedure that facilitates semi-autonomous or pseudo-autonomous driving in accordance with one or more embodiments described herein.
FIGs. 12-13 illustrate flow diagrams of example, non-limiting computer-implemented methods that facilitate monitoring of semi-autonomous or pseudo-autonomous driving in accordance with one or more embodiments described herein.
FIG. 14 illustrates a block diagram of an example, non-limiting system including a backup remote control link that facilitates semi-autonomous or pseudo-autonomous driving in accordance with one or more embodiments described herein.
FIG. 15 illustrates a flow diagram of an example, non-limiting computer-implemented method that facilitates backups for semi-autonomous or pseudo-autonomous driving in accordance with one or more embodiments described herein.
FIG. 16 illustrates a block diagram of an example, non-limiting system including one or more device bids or one or more device profiles that facilitates semi-autonomous or pseudo-autonomous driving in accordance with one or more embodiments described herein.
FIG. 17 illustrates a flow diagram of an example, non-limiting computer-implemented method that facilitates semi-autonomous or pseudo-autonomous driving in accordance with one or more embodiments described herein.
FIG. 18 illustrates a block diagram of an example, non-limiting operating environment in which one or more embodiments described herein can be facilitated.
FIG. 19 illustrates an example networking environment operable to execute various implementations described herein.

### DETAILED DESCRIPTION

The following detailed description is merely illustrative and is not intended to limit embodiments or application/uses of embodiments. Furthermore, there is no intention to be bound by any expressed or implied information presented in the preceding Background or Summary sections, or in the Detailed Description section.

One or more embodiments are now described with reference to the drawings, wherein like referenced numerals are used to refer to like elements throughout. In the following description, for purposes of explanation, numerous specific details are set forth in order to provide a more thorough understanding of the one or more embodiments. It is evident, however, in various cases, that the one or more embodiments can be practiced without these specific details.

Many modern vehicles (e.g., cars, trucks, buses, motorcycles, watercraft, aircraft) implement autonomous driving capabilities. In particular, such vehicles often capture real-time driving conditions via vehicular sensors (e.g., vehicular cameras, vehicular lidar sensors, vehicular microphones) and determine via machine learning how the vehicle should respond (e.g., accelerate, decelerate, turn) to those real-time driving conditions.

Unfortunately, existing autonomous driving techniques offer limited functionality. Indeed, as mentioned above, existing autonomous driving techniques often rely upon machine learning models to analyze the real-time driving conditions measured by the sensors of a vehicle. Although machine learning models have demonstrated impressive accuracy in determining how a vehicle should respond to real-time driving conditions, such machine learning models can reliably or confidently handle only real-time driving conditions that are related to those on which the machine learning models were trained. It is simply not feasible to include or represent every possible real-time driving condition in the training data of such machine learning models. If such machine learning models encounter a real-time driving condition that is not similar to anything it was trained on (e.g., such real-time driving condition might be a highly unique traffic pattern caused by unusual road design or by in-progress road renovation), whatever autonomous driving determination that is produced by such machine learning models is likely to not be an appropriate response to the real-time driving condition. Given the extremely severe consequences (e.g., vehicle crashes, injury, death) that might potentially occur when such machine learning models make an inaccurate autonomous driving determination, such inability to generalize beyond training data raises serious safety concerns regarding existing autonomous driving techniques.

Accordingly, systems or techniques that can address one or more of these technical problems can be desirable.

Various embodiments described herein can address one or more of these technical problems. One or more embodiments described herein include systems, computer-implemented methods, apparatus, or computer program products that can facilitate semi-autonomous or pseudo-autonomous driving. In particular, when given a vehicle that is desired to be in an autonomous driving mode, various embodiments described herein can involve establishing a remote control link between the vehicle and a computing device, where the computing device is manned by an operator and is physically remote from the vehicle. Upon establishment of the remote control link, the vehicle can share with the computing device whatever real-time driving condition data that is captured via its vehicular sensors. The computing device can render (e.g., in the case of captured images or video feeds), play (e.g., in the case of captured sounds or audio feeds), or otherwise convey such real-time driving condition data in a human-understandable format, so that the operator of the computing device can consider (e.g., read, see, or hear) such real-time driving condition data. The computing device can then, in response to input (e.g., keyboard input, joystick input, touchscreen input, remote steering wheel input, remote pedal input) from the operator, transmit any suitable driving instructions (e.g., acceleration commands, turning commands, headlight commands) to the vehicle so that the vehicle can appropriately respond to the real-time driving condition data. In other words, the vehicle can appear or seem to be acting autonomously from the perspective of any passengers physically-present in the vehicle, but the vehicle can, in actuality, be remotely controlled by the operator of the computing device, hence the terms "semi-autonomous" or "pseudo-autonomous". Note that the operator can be considered as able to handle unexpected, unusual, unique, or otherwise unforeseen driving conditions. In stark contrast, as mentioned above, the machine learning models that power existing autonomous driving techniques cannot confidently handle any driving conditions which they did not encounter during training. In this way, various embodiments described herein can be considered as a safer substitute for existing autonomous driving techniques.

Various embodiments described herein can be considered as a computerized tool (e.g., any suitable combination of computer-executable hardware or computer-executable software) that is onboard a vehicle and that can facilitate semi-autonomous or pseudo-autonomous driving of the vehicle. In various aspects, the computerized tool can comprise a search component or a control component.

In various embodiments, the vehicle can comprise one or more vehicle sensors. In various aspects, the one or more vehicle sensors can electronically record, measure, or otherwise capture real-time driving condition data associated with whatever physical area on which or in which the vehicle is presently traveling or is otherwise presently located. More specifically, the one or more vehicle sensors can include one or more cameras of the vehicle, one or more microphones of the vehicle, one or more thermometers of the vehicle, one or more hygrometers of the vehicle, one or more proximity sensors (e.g., radar, sonar, lidar) of the vehicle, one or more motion sensors (e.g., speedometer, accelerometer, gyro sensor) of the vehicle, one or more global positioning sensors of the vehicle, or one or more biometric sensors (e.g., heartrate sensor, blood pressure sensor, body temperature sensor) of the vehicle. In various aspects, the one or more cameras can capture one or more images of the current or present surroundings of the vehicle (e.g., images of roadway that lie in front of the vehicle, images of roadway that lie behind the vehicle, images of roadway that lie beside the vehicle). In various instances, the one or more microphones can record one or more noises that are currently or presently occurring near the vehicle. In various cases, the one or more thermometers can measure one or more temperatures associated with the current or present surroundings of the vehicle (e.g., air or surface temperatures associated with whatever road on which the vehicle is traveling). In various aspects, the one or more hygrometers can measure one or more humidities associated with the current or present surroundings of the vehicle (e.g., air or surface moisture levels associated with whatever road on which the vehicle is traveling). In various instances, the one or more proximity sensors can measure one or more proximity detections associated with the current or present surroundings of the vehicle (e.g., can detect when tangible objects come within a threshold distance of the front, sides, or rear of the vehicle). In various cases, the one or more motion sensors can record one or more physical motions (e.g., accelerating, braking, turning, rolling) currently or presently being performed by the vehicle. In various aspects, the one or more global positioning sensors can calculate or triangulate a current or present location (e.g., latitude, longitude, elevation) of the vehicle. In various instances, the one or more biometric sensors can record one or more health metrics that are currently or presently exhibited by any passenger physically riding within the vehicle. In various cases, such one or more images, such one or more noises, such one or more temperatures, such one or more humidities, such one or more proximity detections, such one or more physical motions, such location, or such one or more health metrics can collectively be considered as the real-time driving condition data.

In various embodiments, the vehicle can comprise one or more driving actuators. In various aspects, the one or more driving actuators can be any suitable hardware or software that can electronically control, adjust, or otherwise facilitate any suitable autonomous driving capabilities of the vehicle. More specifically, the one or more driving actuators can include one or more steering actuators, one or more throttle actuators, one or more braking actuators, one or more camera actuators, one or more lighting actuators, or one or more speaker actuators. In various aspects, the one or more steering actuators can be any suitable electronic motors or electronic commands that can controllably adjust how the vehicle steers (e.g., that can control a steering wheel of the vehicle). In various instances, the one or more throttle actuators can be any suitable electronic motors or electronic commands that can controllably adjust how the vehicle accelerates (e.g., that can control a throttle or accelerator pedal of the vehicle). In various cases, the one or more braking actuators can be any suitable electronic motors or electronic commands that can controllably adjust how the vehicle brakes (e.g., that can control a braking pedal or brake calipers of the vehicle). In various aspects, the one or more camera actuators can be any suitable electronic motors or electronic commands that can controllably adjust how the one or more cameras of the vehicle capture images or videos (e.g., that can control an orientation, a zoom-level, or a night-vision mode of the one or more cameras). In various instances, the one or more lighting actuators can be any suitable electronic motors or electronic commands that can controllably adjust lights of the vehicle (e.g., that can control an orientation or brightness of headlights of the vehicle). In various cases, the one or more speaker actuators can be any suitable electronic motors or electronic commands that can controllably adjust audio speakers of the vehicle (e.g., that can control an orientation of, a loudness of, or noises produced by the audio speakers). In various aspects, any of the one or more driving actuators can be controlled or operated by any suitable autonomous driving capabilities of the vehicle. In various other aspects, any of the one or more driving actuators can be controlled or operated manually by a physically-present passenger riding in the vehicle (e.g., by a physical driver of the vehicle).

In various embodiments, the search component of the computerized tool can perform a wireless device discovery. In various aspects, the wireless device discovery can be any suitable electronic procedure that can discover, identify, or otherwise find one or more remote computing devices, where such one or more remote computing devices are physically remote or physically distant from the vehicle (e.g., sometimes by dozens or hundreds of miles) but are nevertheless within electronic communication range of the vehicle. In various instances, the wireless device discovery can comprise any suitable discovery protocol, such as those based on Wireless Fidelity (Wi-Fi), those based on BLUETOOTH^{®}, those based on radio, or those based on any other suitable types of electronic signals or electronic connections.

In various cases, each of the one or more remote computing devices can be any suitable computing device comprising any suitable electronic displays, any suitable electronic speakers, and any suitable human-to-computer interface tools (e.g., keyboards, keypads, touchscreens). In some aspects, a remote computing device can be a stationary, functioning replica or simulation of a cockpit, control panel, or dashboard of the vehicle (e.g., the vehicle can be a car having a driver seat, a steering wheel, an accelerator pedal, and a braking pedal; in such case, a remote computing device can be a computer work station having a seat, an operable steering wheel simulator as a first human-computer interface device, an operable accelerator pedal simulator as a second human-computer interface device, and an operable braking pedal simulator as a third human-computer interface device). But this is a mere non-limiting example. In other aspects, a remote computing device can exhibit any other suitable construction (e.g., can be a desktop computer, a laptop computer, or a smart phone). In various instances, any of the one or more remote computing devices can be located at the same or different physical locations as each other. In any case, each of the one or more remote computing devices can be manned by a operator.

In various embodiments, the control component of the computerized tool can, in response to discovery of the one or more remote computing devices, establish a remote control link with any given one of the one or more remote computing devices. In various aspects, the remote control link can be any suitable wireless electronic communication channel across which electronic data can be transmitted to the vehicle from the given remote computing device or to the given remote computing device from the vehicle. In various aspects, upon establishment of the remote control link, the real-time driving condition data that is captured or measured by the one or more vehicle sensors can be electronically transmitted from the vehicle, across the remote control link, and to the given remote computing device. Note that, in some cases, the real-time driving condition data can be considered as a live feed or stream of electronic data that is continuously or continually transmitted across the remote control link to the given remote computing device. In response to receipt of the real-time driving condition data, the given remote computing device can electronically render, play, or otherwise convey the real-time driving condition data to its operator. As some non-limiting examples, this can involve: visually displaying whatever images, videos, text, or numerical measurements are included in the real-time driving condition data on a computer screen of the given remote computing device; or audibly playing whatever sounds or audio recordings are included in the real-time driving condition data on a speaker of the given remote computing device. Such rendition, playing, or conveying can allow the operator of the given remote computing device to manually inspect the real-time driving condition data (e.g., to visually see whatever images, videos, text, or numerical measurements are included in the real-time driving condition data; to audibly hear whatever sounds or audio recordings are included in the real-time driving condition data). In various aspects, the operator can thus determine one or more appropriate actions (e.g., decelerating, turning, sounding a horn) for the vehicle to take in light of the real-time driving condition data. In various instances, the given remote computing device can, in response to corresponding input from the operator, transmit electronic instructions across the remote control link to the vehicle, where such electronic instructions can command or otherwise cause the one or more driving actuators to perform the one or more appropriate actions. In this way, the vehicle can be considered as being remotely controlled by the given remote computing device. In other words, the operator of the given remote computing device can be considered as remotely driving the vehicle. In still other words, the vehicle can be either autonomously operated or manually operated by a physically-present passenger prior to establishment of the remote control link, and the vehicle can instead be considered as being remotely operated by the given remote computing device after establishment of the remote control link.

In some aspects, the given remote computing device can be fully in control of the vehicle upon establishment of the remote control link (e.g., all of the one or more driving actuators can follow instructions or commands received from the given remote computing device). In other aspects, however, the given remote computing device can instead be only partially in control of the vehicle upon establishment of the remote control link (e.g., some of the one or more driving actuators can follow instructions or commands received from the given remote computing device, whereas others of the one or more driving actuators can instead be operated autonomously or manually by a physically-present passenger). In yet other aspects, the given remote computing device can be considered as being on standby in case of an emergency (e.g., the given remote computing device can permit the one or more driving actuators to be operated autonomously or manually by a physically-present passenger, until the operator of the given remote computing device determines that the real-time driving condition data warrants his or her intervention).

In various embodiments, the control component can establish the remote control link between the vehicle and the given remote computing device, in response to any suitable triggering event.

In some aspects, the vehicle can be operated manually by a physically-present passenger prior to establishment of the remote control link, and the triggering event can be selection, invocation, or activation, by that physically-present passenger, of autonomous driving capabilities of the vehicle. In other words, the vehicle can initially be in a manual driving mode, the physically-present passenger can attempt to switch (e.g., by pressing any suitable button of the vehicle) the manual driving mode to an autonomous driving mode, and the control component can establish the remote control link in response to such attempt to enter the autonomous driving mode. In still other words, the physically-present passenger can select for the vehicle to drive autonomously, the vehicle can, rather than driving autonomously, instead be remotely driven by the operator of the given remote computing device, and there can be no difference from the perspective of the physically-present passenger (e.g., the physically-present passenger is no longer manually operating the vehicle, which is consistent with what they wanted to accomplish by attempting to switch to the autonomous driving mode).

In other aspects, the vehicle can be operated manually by a physically-present passenger prior to establishment of the remote control link, and the triggering event can be deviation of the vehicle from any suitable electronically marked or flagged travel route. In other words, the vehicle can initially be in a manual driving mode, and there can be an electronic travel route which the vehicle is supposed or intended to follow (e.g., the electronic travel route can any suitable sequence of driving directions indicated by an electronic navigation system of the vehicle). In various instances, it can be the case that the physically-present passenger can deviate from or otherwise fail to follow the electronic travel route (e.g., such as by making a wrong turn, which can be determined via the one or more global positioning sensors of the vehicle). In response to such deviation, the control component can establish the remote control link, which can allow the operator of the given remote computing device to rectify the deviation (e.g., to remotely drive the vehicle back onto the electronic travel route).

In yet other aspects, the vehicle can be operated manually by a physically-present passenger prior to establishment of the remote control link, and the triggering event can be a medical emergency experienced by the physically-present passenger. In other words, the vehicle can initially be in a manual driving mode, in which the vehicle is manually controlled by the physically-present passenger. In various instances, the physically-present passenger can suddenly experience a medical or health emergency (e.g., heart attack, fainting, stroke) that can adversely affect the ability of the physically-present passenger to properly or safely drive the vehicle. In response to such medical or health emergency (e.g., which can be detected by the one or more biometric sensors of the vehicle), the given remote computing device can establish the remote control link, which can allow the operator of the given remote computing device to safely drive the vehicle so as to prevent the medical or health emergency from causing a catastrophic vehicular accident or collision.

In still other aspects, the vehicle can be operated manually by a physically-present passenger prior to establishment of the remote control link, and the triggering event can be violation by the vehicle of any applicable traffic law. In other words, the vehicle can initially be in a manual driving mode, and there can be a traffic law which the vehicle is legally required to abide by (e.g., the traffic law can be a posted speed limit that applies to the current location of the vehicle, which can be determined via the one or more global positioning sensors of the vehicle). In various instances, it can be the case that the physically-present passenger can cause the vehicle to violate the traffic law (e.g., whether or not the vehicle's current motion violates the traffic law can be determined via the one or more motion sensors of the vehicle). In response to such violation, the control component can establish the remote control link, which can allow the operator of the given remote computing device to rectify the violation (e.g., to remotely drive the vehicle such that it is in compliance with the traffic law).

In even other aspects, the vehicle can be operated autonomously prior to establishment of the remote control link, and the triggering event can be the occurrence of an unexpected driving condition. In various instances, the autonomous driving capabilities of the vehicle can be powered by any suitable machine learning model that has been trained to infer driving actions based on inputted driving condition data. In various cases, as mentioned above, real-time driving condition data can be captured or measured by the one or more vehicle sensors. If that real-time driving condition data is not sufficiently similar to the driving condition data on which the machine learning model was trained, that real-time driving condition data can be considered as indicating the occurrence of an unexpected driving condition (e.g., a highly unique driving condition that the machine learning model was not trained to handle). In various aspects, any suitable deep learning encoder (e.g., trained in an unsupervised encoder-decoder pipeline) can be leveraged to determine whether or not the real-time driving condition data indicates an unexpected driving condition (e.g., the deep learning encoder can be configured to convert high-dimensional driving condition data into a low-dimensional latent vector; accordingly, the deep learning encoder can generate a particular latent vector for the real-time driving condition data captured by the one or more vehicle sensors, the deep learning encoder can be used to generate a distribution of latent vectors from the various driving condition data that was used to train the machine learning model, and how well or how poorly that particular latent vector fits into that distribution of latent vectors can indicate whether or not the real-time driving condition data represents an unexpected driving condition). In any case, in response to such unexpected driving condition, the control component can establish the remote control link, which can allow the operator of the given remote computing device to address the unexpected driving condition (e.g., to remotely drive the vehicle so as to safely traverse the unexpected driving condition).

In various embodiments, after establishment of the remote control link between the vehicle and the given remote computing device, the control component can continuously, continually, or periodically monitor the remote control link. More specifically, the control component can regularly measure a signal strength or a latency of the remote control link, and the control component can compare such measured signal strength or latency to any suitable threshold value. In various instances, the control component can take any suitable electronic actions in response to the measured signal strength or latency failing to satisfy the threshold value (e.g., in response to the remote control link becoming too weak or experiencing too much of a time delay).

As a non-limiting example, if the measured signal strength or latency fail to satisfy the threshold value, the control component can electronically render, on any suitable electronic display (e.g., computer screen) of the vehicle, an alert or warning message, where such alert or warning message can notify the physically-present passenger that the remote control link might soon be lost. Accordingly, the physically present passenger can be made aware that a manual driving mode of the vehicle might have to be re-initiated shortly.

As another non-limiting example, if the measured signal strength or latency fail to satisfy the threshold value, the control component can electronically cause the vehicle to enter a caution mode. In various cases, the caution mode can include: causing the one or more driving actuators to reduce the speed of the vehicle; causing the one or more driving actuators to increase following distances of the vehicle; or causing electric power to be diverted from non-critical components of the vehicle (e.g., seat heaters, compact disc player) to the remote control link so as to try to increase strength or decrease latency of the remote control link.

In some embodiments, the control component can continuously, continually, or periodically monitor the remote control link and can electronically facilitate a backup remote control link with another of the one or remote computing devices based on such monitoring. As a non-limiting example, in response to the strength or latency of the remote control link failing to satisfy a moderate threshold value but not yet failing to satisfy a severe threshold value, the control component can prepare another remote control link, referred to as the backup remote control link, between the vehicle and another remote computing device. In response to the strength or latency of the remote control link subsequently worsening so as to fail to satisfy the severe threshold value, the control component can replace the remote control link with the backup remote control link. In other words, when it is determined that the remote control link has suffered some moderate degradation in terms of strength or latency, the control component can create or establish the backup remote control link with the another remote computing device, but the control component can refrain from giving driving authority to the another remote computing device. Thus, when only moderate degradation of the remote control link has so far been detected, the vehicle can still be remotely driven by the given remote computing device, and the backup remote control link can be set up as a redundant safety net. If the remote control link subsequently becomes severely degraded, the control component can then switch driving authority from the given remote computing device to the another remote computing device (e.g., this can possibly involve terminating the remote control link). In this way, the control component can actively monitor the quality of the remote control link and can replace it with another as needed.

In various embodiments, the wireless device discovery conducted by the search component can involve accessing one or more bids or one or more profiles associated with the one or more remote computing devices. In various aspects, a bid can be any suitable electronic data transmitted from a remote computing device that indicates a financial cost that would be incurred or charged if the vehicle were to be remotely operated by that remote computing device. In various instances, a profile can be any suitable electronic data associated with a remote computing device, that indicates how well or how poorly an operator of that remote computing device has historically performed remote driving (e.g., can indicate passenger reviews of the operator, a traffic violation history of the operator, a criminal history of the operator). In various cases, the control component can select or choose the given remote computing device (e.g., can select or choose which remote computing device to link to) based on the one or more bids (e.g., whichever device is associated with the lowest bid) or based on the one or more profiles (e.g., whichever device is associated with a safest or most highly rated operator).

Various embodiments described herein can be employed to use hardware or software to solve problems that are highly technical in nature (e.g., to facilitate semi-autonomous or pseudo-autonomous driving), that are not abstract and that cannot be performed as a set of mental acts by a human. Further, some of the processes performed can be performed by a specialized computer (e.g., autonomously drivable vehicles having actuatable steering, throttling, and braking mechanisms; vehicular sensors such as speedometers, accelerometers, gyro sensors, global positioning sensors, or biometric sensors; a deep learning encoder having internal parameters such as convolutional kernels) for carrying out defined tasks related to semi-autonomous or pseudo-autonomous driving.

For example, such defined tasks can include: discovering, by a device operatively coupled to a processor and onboard a vehicle, one or more computing devices that are physically remote from the vehicle but that are within electronic communication range of the vehicle; and establishing, by the device, a first remote control link between the vehicle and a first computing device of the one or more computing devices, such that steering, accelerating, or braking of the vehicle are operated autonomously or by a physical driver prior to establishment of the first remote control link, and such that the steering, accelerating, or braking of the vehicle are remotely operated by the first computing device after establishment of the first remote control link. Furthermore, such defined tasks can also include: triggering the remote control link in response to selection of an autonomous driving mode; triggering the remote control link in response to deviation from a defined traveling route; triggering the remote control link in response to detection of a passenger health emergency; or triggering the remote control link in response to detection of an unexpected driving condition.

Such defined tasks are not performed manually by humans. Indeed, neither the human mind nor a human with pen and paper can electronically establish, in response to automated detection of various triggering criteria, a wireless communication channel between a vehicle and a remote computing device, such that the vehicle becomes operated, controlled, or driven by the remote computing device rather than by a physically-present passenger. Indeed, vehicles having autonomous driving capabilities are inherently-computerized, hardware-based devices that simply cannot be implemented in any way by the human mind without computers. Furthermore, remotely controlling such vehicles via wireless communication links is an inherently computerized process that also cannot be implemented in any way by the human mind without computers. Accordingly, a computerized tool that can establish a remote control link between a vehicle and a remote computing device in response to automated detection of various triggering criteria is likewise inherently-computerized and hardware-based and cannot be implemented in any sensible, practical, or reasonable way without computers.

Moreover, various embodiments described herein can integrate into a practical application various teachings relating to semi-autonomous or pseudo-autonomous driving. As explained above, existing autonomous driving techniques cannot generalize well beyond their training data. That is, such existing autonomous driving techniques utilize machine learning models to determine what driving actions an autonomous vehicle should perform. However, such machine learning models cannot reliably or confidently determine appropriate or safe driving actions for driving conditions that are not like whatever driving conditions which they encountered during training. Because it is not feasible for training data to represent all possible driving conditions which might be encountered, and because there are such serious consequences for making an inappropriate or unsafe driving action, the inability of existing autonomous driving techniques to generalize beyond their training data renders them rather limited in practice.

Various embodiments described herein can address or ameliorate various of these technical problems. Specifically, for a vehicle carrying a passenger and having autonomous driving capabilities, various embodiments described herein can involve establishing a dedicated communication channel between that vehicle and a remote computing device that is physically isolated from the vehicle. In various aspects, the remote computing device can transmit electronic instructions or commands via the dedicated communication channel to the vehicle, and such electronic instructions or commands can indicate driving actions (e.g., turning, speeding up, slowing down, brightening headlights, activating blinker lights) which can be followed or obeyed by the vehicle. In other words, the vehicle can be driven either autonomously or manually prior to establishment of the dedicated communication channel, and the vehicle can instead be remotely driven by an operator of the remote computing device after establishment of the dedicated communication channel. From the perspective of the passenger, the vehicle can appear or seem to be driving itself. However, in actuality, the vehicle can instead be driven remotely by the operator of the remote computing device. Note that the operator, although not physically present in the vehicle, can nevertheless be able to safely drive the vehicle through unexpected driving conditions, unlike existing autonomous driving techniques. In this way, the vehicle can seem to be driving autonomously from the point of view of the passenger, without suffering from the restricted generalizable that plagues existing autonomous driving techniques. That is, various embodiments described herein can address various disadvantages suffered by existing techniques. Thus, various embodiments described herein certainly constitute a concrete and tangible technical improvement in the field of vehicles. Therefore, various embodiments described herein clearly qualify as useful and practical applications of computers.

Furthermore, various embodiments described herein can control real-world tangible devices based on the disclosed teachings. For example, various embodiments described herein can electronically control (e.g., cause to turn, cause to accelerate, cause to decelerate) real-world vehicles.

It should be appreciated that the herein figures and description provide non-limiting examples of various embodiments and are not necessarily drawn to scale.

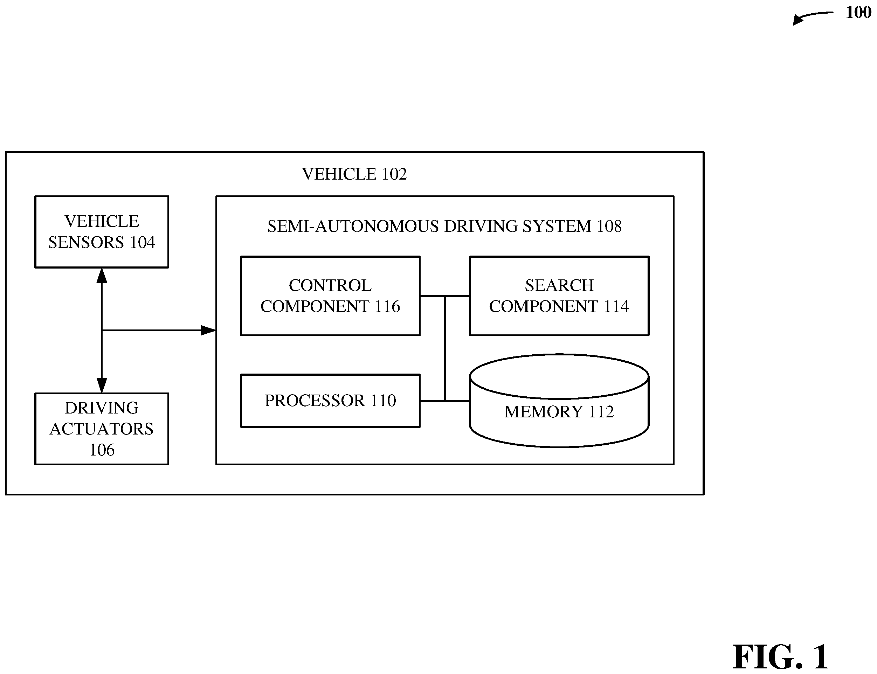

FIG. 1 illustrates a block diagram of an example, non-limiting system 100 that can facilitate semi-autonomous or pseudo-autonomous driving in accordance with one or more embodiments described herein. As shown, a semi-autonomous driving system 108 can be onboard a vehicle 102.

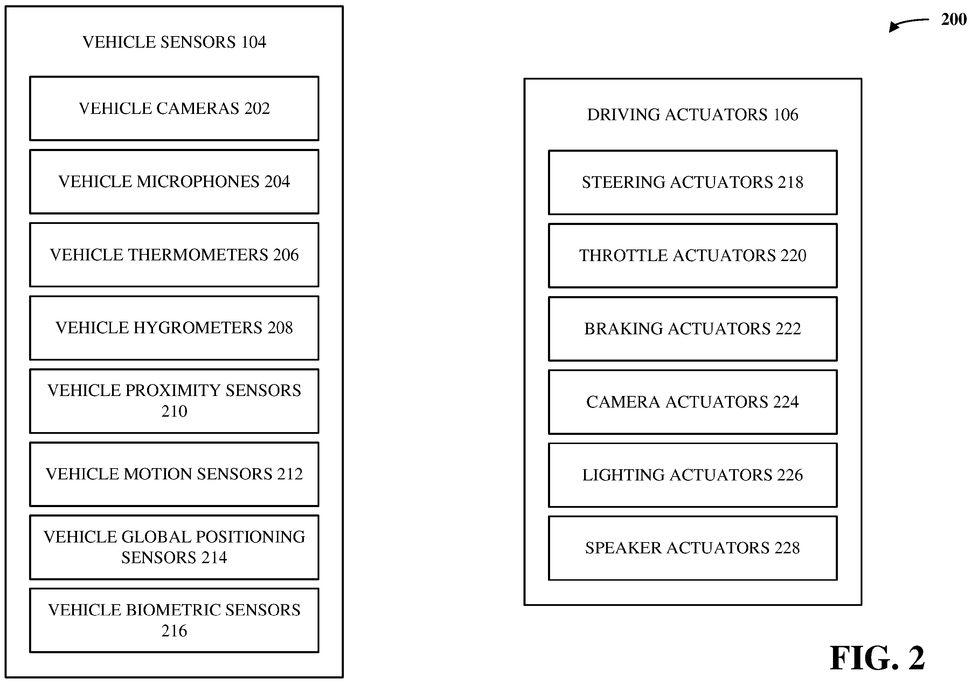

In various embodiments, the vehicle 102 can comprise a set of vehicle sensors 104 and a set of driving actuators 106. In various aspects, the set of vehicle sensors 104 can comprise any suitable number of any suitable types of electronic sensors which can collectively measure, capture, record, or otherwise generate real-time driving condition data associated with the vehicle 102. In various instances, the set of driving actuators 106 can comprise any suitable number of any suitable types of electronically controllable mechanisms that can controllably alter, affect, or otherwise influence how the vehicle 102 drives. Non-limiting aspects are described with respect to FIG. 2.

FIG. 2 illustrates an example, non-limiting block diagram 200 showing the set of vehicle sensors 104 and the set of driving actuators 106 in accordance with one or more embodiments described herein.

In various embodiments, as shown, the set of vehicle sensors 104 can comprise a set of vehicle cameras 202. In various aspects, the set of vehicle cameras 202 can include any suitable number of any suitable types of cameras (e.g., of image-capture devices). In various instances, the set of vehicle cameras 202 can be integrated into or onto the vehicle 102. In various cases, one or more of the set of vehicle cameras 202 can be forward-facing. For example, such one or more cameras can be integrated into or onto any suitable forward-facing surfaces, whether interior or exterior, of the vehicle 102 (e.g., can be built on a dash of the vehicle 102 so as to look through a front windshield of the vehicle 102, can be built around the front windshield of the vehicle 102, can be built into a front bumper of the vehicle 102, can be built around headlights of the vehicle 102, can be built into a hood of the vehicle 102). Because such one or more cameras can be forward-facing, such one or more cameras can be configured to capture or otherwise record images or video frames of whatever surroundings that lie in front of the vehicle 102. In various aspects, one or more of the set of vehicle cameras 202 can be rearward-facing. For example, such one or more cameras can be integrated into or onto any suitable rearward-facing surfaces, whether interior or exterior, of the vehicle 102 (e.g., can be built into or on a rearview mirror of the vehicle 102, can be built into or onto sideview mirrors of the vehicle 102, can be built around a rear windshield of the vehicle 102, can be built into a rear bumper of the vehicle 102, can be built around taillights of the vehicle 102, can be built into a trunk-cover of the vehicle 102). Because such one or more cameras can be rearward-facing, such one or more cameras can be configured to capture or otherwise record images or video frames of whatever surroundings that lie behind the vehicle 102. In various instances, one or more of the set of vehicle cameras 202 can be laterally-facing. For example, such one or more cameras can be integrated into or onto any suitable lateral surfaces, whether interior or exterior, of the vehicle 102 (e.g., can be built into or around doors or door handles of the vehicle 102, can be built into or around fenders of the vehicle 102). Because such one or more cameras can be laterally-facing, such one or more cameras can be configured to capture or otherwise record images or video frames of whatever portions that lie beside the vehicle 102.

In various embodiments, as shown, the set of vehicle sensors 104 can comprise a set of vehicle microphones 204. In various aspects, the set of vehicle microphones 204 can include any suitable number of any suitable types of microphones (e.g., of sound-capture devices). In various instances, the set of vehicle microphones 204 can be integrated into or onto the vehicle 102. In various cases, one or more of the set of vehicle microphones 204 can be forward-facing. For example, such one or more microphones can be integrated into or onto any suitable forward-facing surfaces, whether interior or exterior, of the vehicle 102, so as to capture or otherwise record sounds or noises that occur in whatever surroundings that lie in front of the vehicle 102. In various aspects, one or more of the set of vehicle microphones 204 can be rearward-facing. For example, such one or more microphones can be integrated into or onto any suitable rearward-facing surfaces, whether interior or exterior, of the vehicle 102, so as to capture or otherwise record sounds or noises that occur in whatever surroundings that lie behind the vehicle 102. In various instances, one or more of the set of vehicle microphones 204 can be laterally-facing. For example, such one or more microphones can be integrated into or onto any suitable lateral surfaces, whether interior or exterior, of the vehicle 102, so as to capture or otherwise record sounds or noises that occur in whatever surroundings that lie beside the vehicle 102.

In various embodiments, as shown, the set of vehicle sensors 104 can comprise a set of vehicle thermometers 206. In various aspects, the set of vehicle thermometers 206 can include any suitable number of any suitable types of thermometers (e.g., of temperature sensors). In various instances, the set of vehicle thermometers 206 can be integrated into or onto the vehicle 102. In various cases, one or more of the set of vehicle thermometers 206 can be forward-facing. For example, such one or more thermometers can be integrated into or onto any suitable forward-facing surfaces, whether interior or exterior, of the vehicle 102, so as to capture or otherwise record air temperatures or road surface temperatures associated with whatever surroundings that lie in front of the vehicle 102. In various aspects, one or more of the set of vehicle thermometers 206 can be rearward-facing. For example, such one or more thermometers can be integrated into or onto any suitable rearward-facing surfaces, whether interior or exterior, of the vehicle 102, so as to capture or otherwise record air temperatures or road surface temperatures associated with whatever surroundings that lie behind the vehicle 102. In various instances, one or more of the set of vehicle thermometers 206 can be laterally-facing. For example, such one or more thermometers can be integrated into or onto any suitable lateral surfaces, whether interior or exterior, of the vehicle 102, so as to capture or otherwise record air temperatures or road surface temperatures associated with whatever surroundings that lie beside the vehicle 102.

In various embodiments, as shown, the set of vehicle sensors 104 can comprise a set of vehicle hygrometers 208. In various aspects, the set of vehicle hygrometers 208 can include any suitable number of any suitable types of hygrometers (e.g., of moisture or humidity sensors). In various instances, the set of vehicle hygrometers 208 can be integrated into or onto the vehicle 102. In various cases, one or more of the set of vehicle hygrometers 208 can be forward-facing. For example, such one or more hygrometers can be integrated into or onto any suitable forward-facing surfaces, whether interior or exterior, of the vehicle 102, so as to capture or otherwise record air humidities or road surface moisture levels associated with whatever surroundings that lie in front of the vehicle 102. In various aspects, one or more of the set of vehicle hygrometers 208 can be rearward-facing. For example, such one or more hygrometers can be integrated into or onto any suitable rearward-facing surfaces, whether interior or exterior, of the vehicle 102, so as to capture or otherwise record air humidities or road surface moisture levels associated with whatever surroundings that lie behind the vehicle 102. In various instances, one or more of the set of vehicle hygrometers 208 can be laterally-facing. For example, such one or more hygrometers can be integrated into or onto any suitable lateral surfaces, whether interior or exterior, of the vehicle 102, so as to capture or otherwise record air humidities or road surface moisture levels associated with whatever surroundings that lie beside the vehicle 102.

In various embodiments, as shown, the set of vehicle sensors 104 can comprise a set of vehicle proximity sensors 210. In various aspects, the set of vehicle proximity sensors 210 can include any suitable number of any suitable types of proximity sensors (e.g., of radar, sonar, or lidar sensors). In various instances, the set of vehicle proximity sensors 210 can be integrated into or onto the vehicle 102. In various cases, one or more of the set of vehicle proximity sensors 210 can be forward-facing. For example, such one or more proximity sensors can be integrated into or onto any suitable forward-facing surfaces, whether interior or exterior, of the vehicle 102, so as to capture or otherwise record proximities of tangible objects located in whatever surroundings that lie in front of the vehicle 102. In various aspects, one or more of the set of vehicle proximity sensors 210 can be rearward-facing. For example, such one or more proximity sensors can be integrated into or onto any suitable rearward-facing surfaces, whether interior or exterior, of the vehicle 102, so as to capture or otherwise record proximities of tangible objects located in whatever surroundings that lie behind the vehicle 102. In various instances, one or more of the set of vehicle proximity sensors 210 can be laterally-facing. For example, such one or more proximity sensors can be integrated into or onto any suitable lateral surfaces, whether interior or exterior, of the vehicle 102, so as to capture or otherwise record proximities of tangible objects located in whatever surroundings that lie beside the vehicle 102.

In various embodiments, as shown, the set of vehicle sensors 104 can comprise a set of vehicle motion sensors 212. In various aspects, the set of vehicle motion sensors 212 can include any suitable number of any suitable types of motion sensors (e.g., speedometers, accelerometers, gyroscope sensors). In various instances, the set of vehicle motion sensors 212 can be integrated into or onto the vehicle 102. Accordingly, the set of vehicle motion sensors 212 can record motions exhibited or performed by the vehicle 102 at any given times. For example, the set of vehicle motion sensors 212 can record a linear velocity at which the vehicle 102 is currently or presently traveling. As another example, the set of vehicle motion sensors 212 can record an angular velocity at which the vehicle 102 is currently or presently traveling. As yet another example, the set of vehicle motion sensors 212 can record a linear acceleration that the vehicle 102 is currently or presently experiencing. As even another example, the set of vehicle motion sensors 212 can record an angular acceleration that the vehicle 102 is currently or presently experiencing. As still another example, the set of vehicle motion sensors 212 can record an orientation (e.g., in terms of roll, yaw, or pitch) that the vehicle 102 currently or presently exhibits.

In various embodiments, as shown, the set of vehicle sensors 104 can comprise a set of vehicle global positioning sensors 214. In various aspects, the set of vehicle global positioning sensors 214 can include any suitable number of any suitable types of global positioning sensors. In various instances, the set of vehicle global positioning sensors 214 can be integrated into or onto the vehicle 102. Accordingly, the set of vehicle global positioning sensors 214 can record geographic locations which are physically visited by the vehicle 102 at any given times. For example, the set of vehicle global positioning sensors 214 can record a latitude at which the vehicle 102 is currently or presently located. As another example, the set of vehicle global positioning sensors 214 can record a longitude at which the vehicle 102 is currently or presently located. As even another example, the set of vehicle global positioning sensors 214 can record an elevation at which the vehicle 102 is currently or presently located. As still another example, the set of vehicle global positioning sensors 214 can record a country in which the vehicle 102 is currently or presently located. As yet another example, the set of vehicle global positioning sensors 214 can record a state or province in which the vehicle 102 is currently or presently located. As another example, the set of vehicle global positioning sensors 214 can record a city in which the vehicle 102 is currently or presently located. As still another example, the set of vehicle global positioning sensors 214 can record an address at which the vehicle 102 is currently or presently located.

In various embodiments, as shown, the set of vehicle sensors 104 can comprise a set of vehicle biometric sensors 216. In various aspects, the set of vehicle biometric sensors 216 can include any suitable number of any suitable types of biometric sensors (e.g., heartbeat sensors, breathing sensors, pulse oximeters, bodily thermometers, blood pressure sensors). In various instances, the set of vehicle biometric sensors 216 can be integrated into or onto the vehicle 102. Accordingly, the set of vehicle biometric sensors 216 can record biometric information, health information, or vital-sign information of any passenger that is physically riding within the vehicle 102. For example, the set of vehicle biometric sensors 216 can record or monitor a current or present pulse of the passenger. As another example, the set of vehicle biometric sensors 216 can record or monitor a current or present respiration rate of the passenger. As still another example, the set of vehicle biometric sensors 216 can record or monitor a current or present blood oxygen level of the passenger. As yet another example, the set of vehicle biometric sensors 216 can record or monitor a current or present body temperature of the passenger. As even another example, the set of vehicle biometric sensors 216 can record or monitor a current or present blood pressure of the passenger.

These are mere non-limiting examples for ease of illustration and explanation. In various cases, the set of vehicle sensors 104 can comprise any other suitable types of sensors that can gather or record any suitable data that might pertain to the vehicle 102 or to passengers of the vehicle 102.

In various embodiments, as shown, the driving actuators 106 can comprise a set of steering actuators 218. In various aspects, the set of steering actuators 218 can comprise any suitable number of steering actuators, where a steering actuator can be any suitable electronically controllable mechanism (e.g., such as a servo motor or electrically-driven piston) that can steer the vehicle 102. As a non-limiting example, a steering actuator can, in response to electronic commands or electronic instructions, controllably cause one or more wheels of the vehicle 102 to turn, rotate, or swivel (in any suitable angular direction and by any suitable angular distance) about their steering axes, so as to change a traveling trajectory of the vehicle 102.

In various embodiments, as shown, the driving actuators 106 can comprise a set of throttle actuators 220. In various aspects, the set of throttle actuators 220 can comprise any suitable number of throttle actuators, where a throttle actuator can be any suitable electronically controllable mechanism (e.g., such as a servo motor or electrically-driven piston) that can apply throttle, and thus acceleration, to the vehicle 102. As a non-limiting example, a throttle actuator can, in response to electronic commands or electronic instructions, controllably cause one or more wheels of the vehicle 102 to spin (forwards or backwards, and at suitable velocity) about their primary or driven axes, so as to increase a traveling speed of the vehicle 102.

In various embodiments, as shown, the driving actuators 106 can comprise a set of braking actuators 222. In various aspects, the set of braking actuators 222 can comprise any suitable number of braking actuators, where a braking actuator can be any suitable electronically controllable mechanism (e.g., such as a servo motor or electrically-driven piston) that can apply braking, and thus deceleration, to the vehicle 102. As a non-limiting example, a braking actuator can, in response to electronic commands or electronic instructions, controllably cause one or more brake calipers of the vehicle 102 to compress (at any suitable pressure) their brake pads against one or more wheels of the vehicle 102, so as to decrease a traveling speed of the vehicle 102.

In various embodiments, as shown, the driving actuators 106 can comprise a set of camera actuators 224. In various aspects, the set of camera actuators 224 can comprise any suitable number of camera actuators, where a camera actuator can be any suitable electronically controllable mechanism (e.g., such as a servo motor or electrically-driven piston) that can alter an operation of any of the set of vehicle cameras 202. As a non-limiting example, a camera actuator can, in response to electronic commands or electronic instructions, controllably alter an optical zoom level of any of the set of vehicle cameras 202, controllably alter a physical orientation of any of the set of vehicle cameras 202, or controllably alter a vision mode (e.g., day-light vision, night vision, thermal vision) of any of the set of vehicle cameras 202.

In various embodiments, as shown, the driving actuators 106 can comprise a set of lighting actuators 226. In various aspects, the set of lighting actuators 226 can comprise any suitable number of lighting actuators, where a lighting actuator can be any suitable electronically controllable mechanism (e.g., such as a servo motor or electrically-driven piston) that can alter an operation of any lights (e.g., headlights, taillights, fog lights, hazard lights, turn signal lights) of the vehicle 102. As a non-limiting example, a lighting actuator can, in response to electronic commands or electronic instructions, controllably alter a brightness level of any light of the vehicle 102, controllably alter a physical orientation of any light of the vehicle 102, or controllably alter a color emitted by any light of the vehicle 102.

In various embodiments, as shown, the driving actuators 106 can comprise a set of speaker actuators 228. In various aspects, the set of speaker actuators 228 can comprise any suitable number of speaker actuators, where a speaker actuator can be any suitable electronically controllable mechanism (e.g., such as a servo motor or electrically-driven piston) that can alter an operation of any audio speaker of the vehicle 102. As a non-limiting example, a speaker actuator can, in response to electronic commands or electronic instructions, controllably alter a volume level of any audio speaker of the vehicle 102, controllably alter a physical orientation of any audio speaker of the vehicle 102, or controllably cause any audio speaker of the vehicle 102 to play or audibly reproduce any suitable noises or sounds.

These are mere non-limiting examples for ease of illustration and explanation. In various cases, the set of driving actuators 106 can comprise any other suitable types of actuators that can control, influence, or otherwise affect how the vehicle 102 drives or operates.

In various cases, the set of driving actuators 106 can be controlled or otherwise operated by any suitable autonomous driving capabilities of the vehicle 102. In other cases, however, the set of driving actuators 106 can be idle or dormant, in which case the vehicle 102 can be manually driven by a passenger that is physically riding within the vehicle 102.

Referring back to FIG. 1, it can be desired for the vehicle 102 to be driven in a seemingly autonomous fashion (from the perspective of a passenger physically riding in the vehicle 102), without subjecting the vehicle 102 to the disadvantages caused by the limited generalizability of autonomous driving. As described herein, the semi-autonomous driving system 108 can facilitate this objective.

In various embodiments, the semi-autonomous driving system 108 can comprise a processor 110 (e.g., computer processing unit, microprocessor) and a non-transitory computer-readable memory 112 that is operably or operatively or communicatively connected or coupled to the processor 110. The non-transitory computer-readable memory 112 can store computer-executable instructions which, upon execution by the processor 110, can cause the processor 110 or other components of the semi-autonomous driving system 108 (e.g., search component 114, control component 116) to perform one or more acts. In various embodiments, the non-transitory computer-readable memory 112 can store computer-executable components (e.g., search component 114, control component 116), and the processor 110 can execute the computer-executable components.

In various embodiments, the semi-autonomous driving system 108 can comprise a search component 114. In various aspects, as described herein, the search component 114 can electronically identify a remote computing device that can communicate with the vehicle 102.

In various embodiments, the semi-autonomous driving system 108 can comprise a control component 116. In various instances, as described herein, the control component 116 can electronically establish a remote control link between the vehicle 102 and the remote computing device, such that the vehicle 102 can be remotely driven by the remote computing device.

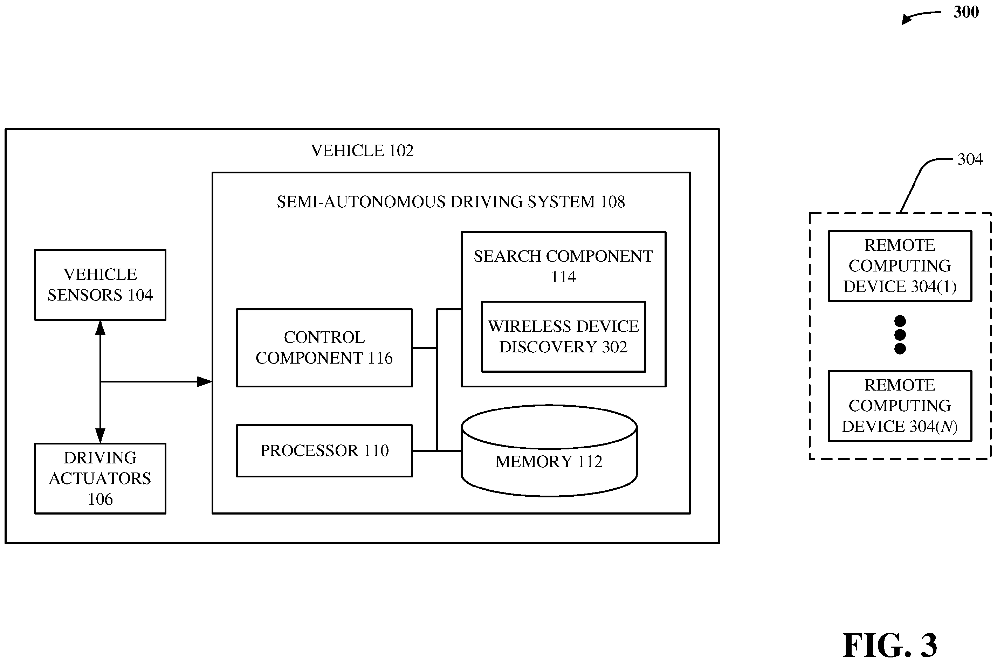

FIG. 3 illustrates a block diagram of an example, non-limiting system 300 including a wireless device discovery procedure that can facilitate semi-autonomous or pseudo-autonomous driving in accordance with one or more embodiments described herein. As shown, the system 300 can, in some cases, comprise the same components as the system 100, and can further comprise a wireless device discovery 302 and a set of remote computing devices 304.

In various embodiments, the search component 114 can electronically perform the wireless device discovery 302. In various aspects, the wireless device discovery 302 can be any suitable electronic discovery process, procedure, or protocol that can electronically identify, find, or otherwise discover any suitable devices that can wirelessly communicate with the vehicle 102. As a non-limiting example, the wireless device discovery 302 can be or otherwise utilize BLUETOOTH^{®} Service Discovery Protocol (SDP). As another non-limiting example, the wireless device discovery 302 can be or otherwise utilize Domain Name Service Service Discovery (DNS-SD). As yet another non-limiting example, the wireless device discovery 302 can be or otherwise utilize Dynamic Host Configuration Protocol (DHCP). As even another non-limiting example, the wireless device discovery 302 can be or otherwise utilize Internet Storage Name Service (iSNS). As still another non-limiting example, the wireless device discovery 302 can be or otherwise utilize Lightweight Service Discovery (LSD). As another non-limiting example, the wireless device discovery 302 can be or otherwise utilize Link Layer Discovery Protocol (LLDP). As yet another non-limiting example, the wireless device discovery 302 can be or otherwise utilize Local Peer Discovery. As even another non-limiting example, the wireless device discovery 302 can be or otherwise utilize Multicast Source Discovery Protocol. As still another non-limiting example, the wireless device discovery 302 can be or otherwise utilize Service Location Protocol (SLP). As another non-limiting example, the wireless device discovery 302 can be or otherwise utilize Session Announcement Protocol (SAP). As yet another non-limiting example, the wireless device discovery 302 can be or otherwise utilize Simple Service Discovery Protocol (SSDP). As even another non-limiting example, the wireless device discovery 302 can be or otherwise utilize Universal Description Discovery and Integration (UDDI). As still another non-limiting example, the wireless device discovery 302 can be or otherwise utilize Web Proxy Autodiscovery Protocol (WPAD). As another non-limiting example, the wireless device discovery 302 can be or otherwise utilize Web Services Dynamic Discovery. In various cases, any suitable combination of the aforementioned, or of any other suitable discovery protocols, can be utilized in the wireless device discovery 302.

In any case, performance of the wireless device discovery 302 can cause the search component 114 to discover the set of remote computing devices 304. In various aspects, the set of remote computing devices 304 can comprise *n* devices, for any suitable positive integer *n:* a remote computing device 304(1) to a remote computing device 304(n). In various instances, each of the set of remote computing device 304 can be physically remote from the vehicle 102. Indeed, in some cases, any of the set of remote computing devices 304 can be many miles (e.g., tens of miles, hundreds of miles) away from the vehicle 102. Despite being physically remote or isolated from the vehicle 102, each of the set of remote computing devices 304 can be within an electronic communication range of the vehicle 102. In other words, each of the remote computing devices 304 can be able to electronically communicate with the vehicle 102, hence why the search component 114 is able to discover the set of remote computing devices 304 (e.g., a computing device that cannot electronically communicate with the vehicle 102 can be not discovered or discoverable by the search component 114).

In various aspects, each of the set of remote computing devices 304 can be any suitable computing device that can be manned by an operator. Accordingly, each of the set of remote computing devices 304 can comprise any suitable electronic displays (e.g., any suitable computer screens or computer monitors) which can render visual information to be viewed by a respective operator, each of the set of remote computing devices 304 can comprise any suitable electronic speakers which can produce audio information to be heard by a respective operator, and each of the set of remote computing devices 304 can comprise any suitable human-computer interface tools (e.g., keyboards, keypads, touchscreens, voice control systems) that a respective operator can use to provide manual input.

As a non-limiting example, any of the set of remote computing devices 304 can be a computerized workstation that mimics or otherwise simulates a cockpit, dashboard, control panel, control desk, or control cabin of the vehicle 102. For instance, suppose that the vehicle 102 is a car, truck, or bus. In such case, any of the set of remote computing devices 304 can be outfitted or equipped with: a human-computer interface tool that resembles or functions as a steering wheel of a car, truck, or bus; another human-computer interface tool that resembles or functions as an accelerator pedal of a car, truck, or bus; yet another human-computer interface tool that resembles or functions as a braking pedal of a car, truck, or bus; or even another human-computer interface tool that resembles or functions as a paddle shifter of a car, truck, or bus. As another instance, suppose that the vehicle 102 is a boat. In such case, any of the set of remote computing devices 304 can be outfitted or equipped with: a human-computer interface tool that resembles or functions as a steering wheel of a boat; another human-computer interface tool that resembles or functions as a throttle handle of a boat; or yet another human-computer interface tool that resembles or functions as a trim control switch of a boat.

In other cases, however, any of the set of remote computing devices 304 can be any other suitable type of computing device. As a non-limiting example, any of the set of remote computing devices 304 can be a desktop computer. As another non-limiting example, any of the set of remote computing devices 304 can be a laptop computer. As still another non-limiting example, any of the set of remote computing devices 304 can be a smart phone. As even another non-limiting example, any of the set of remote computing devices 304 can be a tablet device.

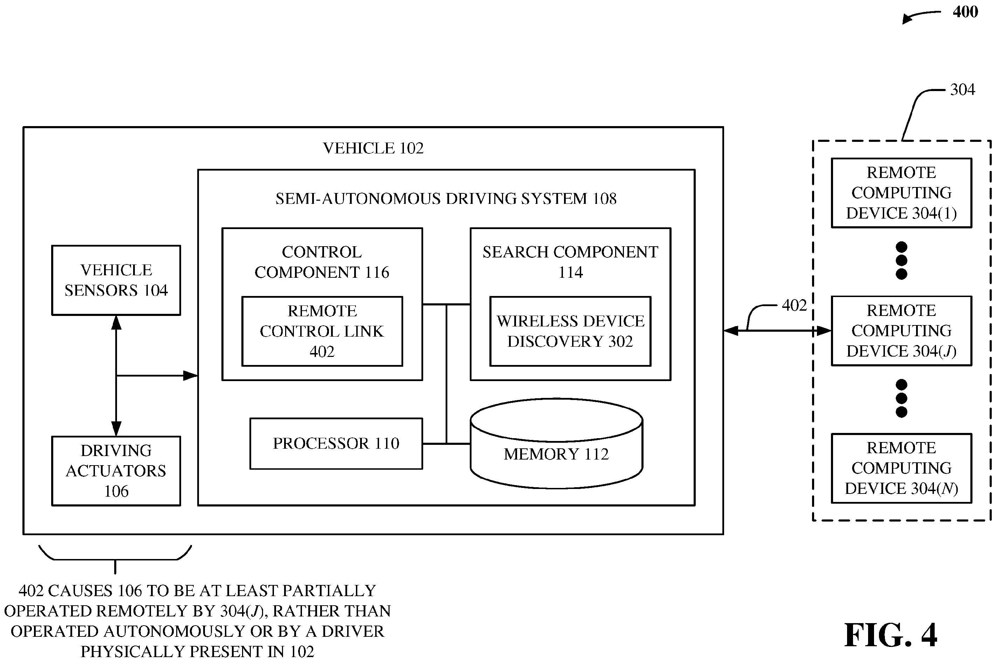

FIG. 4 illustrates a block diagram of an example, non-limiting system 400 including a remote control link that can facilitate semi-autonomous or pseudo-autonomous driving in accordance with one or more embodiments described herein. As shown, the system 400 can, in some cases, comprise the same components as the system 300, and can further comprise a remote control link 402.

In various embodiments, the control component 116 can electronically create, electronically form, or otherwise electronically establish the remote control link 402 between the vehicle 102 and a remote computing device 304(j), for any suitable positive integer 1 ≤ *j* ≤ *n.* In various aspects, the remote control link 402 can be any suitable wireless electronic communication channel that enables electronic data to be transmitted from the vehicle 102 to the remote computing device 304(j), or that enables electronic data to be transmitted from the remote computing device 304(j) to the vehicle 102. In some cases, the remote control link 402 can be any suitable Internet connection that utilizes one or more intermediate access points or intermediate routers. In other cases, the remote control link 402 can be any suitable peer-to-peer connection that can operate or otherwise function in the absence of an intermediate access point or intermediate router. Non-limiting examples of such a peer-to-peer connection can include a BLUETOOTH^{®} P2P connection or a Wi-Fi P2P connection (e.g., such as Wi-Fi DIRECT^{®}).

In various aspects, upon establishment of the remote control link 402, the control component 116 can continuously or continually transmit whatever real-time driving condition data is captured or measured by the set of vehicle sensors 104 across the remote control link 402, such that the remote computing device 304(j) can access such real-time driving condition data. In other words, the control component 116 can, via the remote control link 402, live stream the real-time driving condition data to the remote computing device 304(j).

In various instances, upon receiving the real-time driving condition data via the remote control link 402, the remote computing device 304(j) can convey the real-time driving condition data to an operator of the remote computing device 304(j). As a non-limiting example, whatever visual information (e.g., images or videos captured by the set of vehicle cameras 202; text or numerical measurements captured by the set of vehicle thermometers 206, by the set of vehicle hygrometers 208, by the set of vehicle proximity sensors 210, by the set of vehicle global positioning sensors 214, or by the set of vehicle biometric sensors 216) can be visually rendered on a computer screen or other electronic display of the remote computing device 304(j), such that the operator of the remote computing device 304(j) can see such visual information. As another non-limiting example, whatever audio information (e.g., sounds recorded by the set of vehicle microphones 204) can be audibly played or produced by an electronic speaker of the remote computing device 304(j), such that the operator of the remote computing device 304(j) can hear such audio information. As even another non-limiting example, whatever tactile information (e.g., motion recorded by the set of vehicle motion sensors 212) can be recreated or simulated by any suitable haptic feedback device of the remote computing device 304(j).

In various aspects, such visual, audible, or tactile conveyance of the real-time driving condition data by the remote computing device 304(j) can enable the operator of the remote computing device 304(j) to manually inspect or manually consider the real-time driving condition data. The operator of the remote computing device 304(j) can thus determine one or more appropriate driving actions that the vehicle 102 should perform so as to deal with or respond to the real-time driving condition data. As a non-limiting example, the operator of the remote computing device 304(j) can determine that, given the real-time driving condition data, the vehicle 102 should slow down by a particular amount. As another non-limiting example, the operator of the remote computing device 304(j) can determine that, given the real-time driving condition data, the vehicle 102 should turn left by a particular degree. As still another non-limiting example, the operator of the remote computing device 304(j) can determine that, given the real-time driving condition data, the vehicle 102 should perform a rightward lane shift. As even another non-limiting example, the operator of the remote computing device 304(j) can determine that, given the real-time driving condition data, the vehicle 102 should beep its horn.

In any case, the operator can interact with the remote computing device 304(*j*) via any of its human-computer interface tools, thereby causing the remote computing device 304(j) to generate one or more electronic instructions that respectively correspond to the one or more appropriate driving actions determined by the operator of the remote computing device 304(j). As a non-limiting example, if the operator determines that the vehicle 102 should slow down by a particular amount, then the operator can interact with the remote computing device 304(j), so that the remote computing device 304(j) creates an electronic instruction indicating that the vehicle 102 should slow down by the particular amount. As another non-limiting example, if the operator determines that the vehicle 102 should turn left by a particular degree, then the operator can interact with the remote computing device 304(j), so that the remote computing device 304(j) creates an electronic instruction indicating that the vehicle 102 should turn left by that particular degree. As still another non-limiting example, if the operator determines that the vehicle 102 should perform a rightward lane shift, then the operator can interact with the remote computing device 304(j), so that the remote computing device 304(j) creates an electronic instruction indicating that the vehicle 102 should perform the rightward lane shift. As even another non-limiting example, if the operator determines that the vehicle 102 should should beep its horn, then the operator can interact with the remote computing device 304(j), so that the remote computing device 304(j) creates an electronic instruction indicating that the vehicle 102 should should beep its horn.

In various aspects, the remote computing device 304(j) can electronically transmit the one or more electronic instructions across the remote control link 402 to the vehicle 102. In response to receipt of the one or more electronic instructions, the set of driving actuators 106 can be activated or otherwise initiated so as to follow or obey the one or more electronic instructions. As a non-limiting example, if the one or more electronic instructions indicate that the vehicle 102 should slow down by a particular amount, the set of driving actuators 106 can cause the vehicle 102 to actually slow down by that particular amount. As another non-limiting example, if the one or more electronic instructions indicate that the vehicle 102 should turn left by a particular degree, the set of driving actuators 106 can cause the vehicle 102 to actually turn left by that particular degree. As still another non-limiting example, if the one or more electronic instructions indicate that the vehicle 102 should perform a rightward lane shift, the set of driving actuators 106 can cause the vehicle 102 to actually perform the rightward lane shift. As even another non-limiting example, if the one or more electronic instructions indicate that the vehicle 102 should should beep its horn, the set of driving actuators 106 can cause the vehicle 102 to actually beep its horn.

In this way, the real-time driving condition data captured by the set of vehicle sensors 104 can be live-streamed, via the remote control link 402, to the remote computing device 304(j), and the remote computing device 304(j) can respond by transmitting, via the remote control link 402, electronic instructions which can be obeyed or performed by the set of driving actuators 106. Thus, prior to establishment of the remote control link 402, the vehicle 102 can be considered as being operated autonomously, or instead as being operated manually by a passenger that is physically riding in the vehicle 102. However, after establishment of the remote control link 402, the vehicle 102 can instead be considered as being operated remotely by the operator of the remote computing device 304(j).

In some embodiments, the operator of the remote computing device 304(j) can be in full control of the vehicle 102. That is, all of the set of driving actuators 106 can be responsive to the electronic instructions transmitted by the remote computing device 304(*j*). However, in other embodiments, the operator of the remote computing device 304(j) can instead be in partial control of the vehicle 102. That is, fewer than all of the set of driving actuators 106 can be responsive to the electronic instructions transmitted by the remote computing device 304(j). As a non-limiting example, it can be possible that set of braking actuators 222 can be responsive to (e.g., are obligated or forced to obey) the electronic instructions transmitted by the remote computing device 304(j) but that the set of steering actuators 218 are not responsive to (e.g., are not obligated or forced to obey) the electronic instructions transmitted by the remote computing device 304(j). In such case, the operator of the remote computing device 304(j) can remotely control how the vehicle 102 brakes but cannot remotely control how the vehicle 102 steers. Instead, how the vehicle 102 steers can be controlled either autonomously by the vehicle 102 or manually by a passenger that is physically riding in the vehicle 102.

In various aspects, such partial control can be considered as advantageous or beneficial in certain situations, such as when a passenger desires to manually drive the vehicle 102 but is not physically able to operate certain aspects of the vehicle 102. As a non-limiting example, suppose that the passenger is a leg amputee. In such case, the passenger can be physically able to operate a steering wheel of the vehicle 102 but can be physically unable to operate an accelerator pedal or brake pedal of the vehicle 102. In such case, the passenger can manually control the steering wheel, while the accelerator pedal and brake pedal can instead be remotely controlled by the operator of remote computing device 304(j). This can allow the passenger to experience the pleasure or leisure of driving the vehicle 102, which otherwise might not be possible given their physical disability.

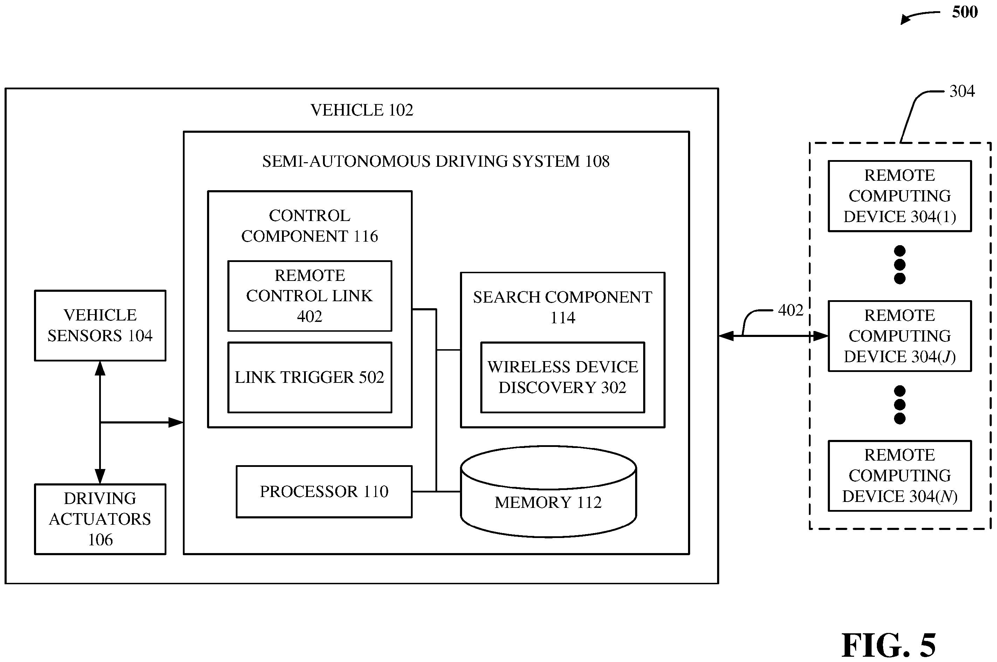

FIG. 5 illustrates a block diagram of an example, non-limiting system 500 including a link trigger that can facilitate semi-autonomous or pseudo-autonomous driving in accordance with one or more embodiments described herein. As shown, the system 500 can, in some cases, comprise the same components as the system 400, and can further comprise a link trigger 404.

In various embodiments, the control component 116 can electronically establish the remote control link 402, in response to the link trigger 502. In various aspects, the link trigger 502 can be the electronic detection or occurrence of any suitable traffic-related or driving-related event pertaining to the vehicle 102.

In some instances, the link trigger 502 can be the detection or occurrence of an invocation of autonomous driving capabilities of the vehicle 102. As a non-limiting example, suppose that the vehicle 102 is initially or originally in a manual driving mode. That is, the vehicle 102 can be initially or originally driven manually by a passenger that is physically riding in the vehicle 102. In various aspects, that passenger can, at some point in time, invoke an autonomous driving mode of the vehicle 102. In other words, the passenger can, at some point, attempt to cause the vehicle 102 to begin driving autonomously, so that the passenger need no longer manually drive the vehicle 102. In various cases, the passenger can attempt this by pressing any suitable button of the vehicle 102 or by selecting any suitable graphical user interface element of the vehicle 102, which button or graphical user interface element activates (or purportedly activates) the autonomous driving mode. In various aspects, the control component 116 can respond to such invocation or attempted invocation of the autonomous driving mode (e.g., can respond to the button or the graphical user interface element being pressed) by establishing the remote control link 402. As described above, upon establishment of the remote control link 402, the vehicle 102 can, in some cases, be considered as being remotely driven by the operator of the remote computing device 304(j). However, during such remote driving, the passenger physically riding in the vehicle 102 need not manually drive the vehicle 102. Accordingly, from the perspective of the passenger, the vehicle 102 appears or seems to be driving autonomously. Because the vehicle 102 can actually be remotely driven by the operator of the remote computing device 304(j), this can be considered as a semi-autonomous or pseudo-autonomous driving mode of the vehicle 102.

In other instances, the link trigger 502 can be the detection or occurrence of a deviation from any suitable electronic travel route of the vehicle 102. As a non-limiting example, suppose that the vehicle 102 is initially or originally in a manual driving mode. That is, the vehicle 102 can be initially or originally driven manually by a passenger that is physically riding in the vehicle 102. In various aspects, an electronic navigation system of the vehicle 102 can indicate, such as on a computer screen or heads-up display of the vehicle 102, an electronic travel route that the vehicle 102 is supposed or otherwise required to follow. In various instances, the electronic travel route can be any suitable sequence of driving directions (e.g., turn left onto Main St., take Exit 235, continue straight 16 miles) that lead toward any suitable destination. In various cases, the passenger that is manually driving the vehicle 102 can cause the vehicle 102 to deviate from the electronic travel route, such as by making a wrong turn or taking a wrong exit. In various aspects, the control component 116 can detect such deviation by comparing the current location of the vehicle 102 as indicated by the set of vehicle global positioning sensors 214 with the electronic travel route. Indeed, if the current location of the vehicle 102 is on or otherwise consistent with the electronic travel route, the control component 116 can infer that no deviation has occurred. On the other hand, if the current location of the vehicle 102 is off of or otherwise inconsistent with the electronic travel route, the control component 116 can instead infer that a deviation has occurred. In various aspects, the control component 116 can respond to such deviation by establishing the remote control link 402. As described above, upon establishment of the remote control link 402, the vehicle 102 can, in some cases, be considered as being remotely driven by the operator of the remote computing device 304(j). Accordingly, the operator of the remote computing device 304(j) can cure the deviation by remotely driving the vehicle 102 back onto the electronic travel route. In this way, the electronic travel route can be enforced.

In yet other instances, the link trigger 502 can be the detection or occurrence of a health-related emergency afflicting a passenger of the vehicle 102. As a non-limiting example, suppose that the vehicle 102 is initially or originally in a manual driving mode. That is, the vehicle 102 can be initially or originally driven manually by a passenger that is physically riding in the vehicle 102. In various aspects, as mentioned above, the one or more vehicle biometric sensors 216 can be considered as monitoring vital signs (e.g., heartrate, breathing rate, blood oxygen levels, body temperature) of the passenger. In various instances, it can be possible for the passenger to suddenly experience, while manually driving the vehicle 102, a medical emergency that can impede the passenger's ability to safely drive the vehicle 102. For instance, the passenger can experience a sudden heart attack or stroke. In various cases, the control component 116 can detect such sudden medical emergency, by analyzing whatever real-time vital-sign data is recorded by the one or more vehicle biometric sensors 216. In some aspects, the control component 116 can detect the sudden medical emergency by comparing the real-time vital-sign data to defined thresholds (e.g., if the passenger's heartrate drops below a minimum threshold or rises above a maximum threshold, the control component 116 can infer that a medical emergency is occurring). In other aspects, the control component 116 can detect the sudden medical emergency by executing on the real-time vital-sign data a pre-trained medical emergency classifier (e.g., such classifier can be trained in supervised, unsupervised, or reinforcement learning fashion to receive as input vital-sign data and to produce as output a classification label indicating whether or not such vital-sign data indicates a medical emergency). In various aspects, the control component 116 can respond to such medical emergency by establishing the remote control link 402. As described above, upon establishment of the remote control link 402, the vehicle 102 can, in some cases, be considered as being remotely driven by the operator of the remote computing device 304(j). Accordingly, the vehicle 102 can nevertheless be safely driven by the operator of the remote computing device 304(j) notwithstanding the medical emergency of the passenger. In this way, a vehicular accident or collision due to health-related incapacitation of the passenger can be avoided.

In still other instances, the link trigger 502 can be the detection or occurrence of a traffic law violation by the vehicle 102. As a non-limiting example, suppose that the vehicle 102 is initially or originally in a manual driving mode. That is, the vehicle 102 can be initially or originally driven manually by a passenger that is physically riding in the vehicle 102. In various aspects, the vehicle 102 can be located in a geographic area in which a particular traffic law (e.g., a speed limit) is effective. In various cases, the control component 116 can identify the particular traffic law, by querying any suitable traffic law database with whatever location is currently or presently indicated by the set of vehicle global positioning sensors 214. Alternatively, the particular traffic law can be indicated by an electronic navigation system of the vehicle 102. In various instances, the passenger that is manually driving the vehicle 102 can cause the vehicle 102 to violate the particular traffic law (e.g., to exceed the speed limit). In various aspects, the control component 116 can detect such violation by determining whether or not whatever real-time motion data is captured by the one or more vehicle motion sensors 212 complies with the particular traffic law. Indeed, if the real-time motion data complies with or otherwise satisfies whatever thresholds are indicated by the particular traffic law, the control component 116 can infer that no violation has occurred. On the other hand, if the real-time motion data does not comply with or otherwise does not satisfy whatever thresholds are indicated by the particular traffic law, the control component 116 can infer that a violation has occurred. In various aspects, the control component 116 can respond to such violation by establishing the remote control link 402. As described above, upon establishment of the remote control link 402, the vehicle 102 can, in some cases, be considered as being remotely driven by the operator of the remote computing device 304(j). Accordingly, the operator of the remote computing device 304(j) can cure the violation by remotely driving the vehicle 102 in compliance with the particular traffic law. In this way, the particular traffic law can be enforced.

In other instances, the link trigger 502 can be the detection or occurrence of an unexpected driving condition encountered by the vehicle 102. As a non-limiting example, suppose that the vehicle 102 is initially or originally in an autonomous driving mode. That is, the vehicle 102 can be initially or originally driven autonomously. In various aspects, such autonomous driving can be computationally powered by a machine learning model that has been trained to receive as input the real-time driving condition data captured by the set of vehicle sensors 104, and to determine as output one or more driving actions to be taken by the vehicle 102 (e.g., to be implemented by the set of driving actuators 106).

In some cases, the control component 116 can detect an unexpected driving condition by comparing the real-time driving condition data captured by the set of vehicle sensors 104 to whatever collection of driving condition data that the machine learning model was trained on. In various instances, the control component 116 can facilitate such comparison via a deep learning encoder. In particular, a deep learning encoder can exhibit any suitable internal architecture (e.g., can have any suitable number of any suitable types of layers, such as dense layers, convolutional layers, non-linearity layers, batch normalization layers, or pooling layers; can have any suitable interlayer connections, such as forward connections, skip connections, or recurrent connections; can have any suitable activation functions, such as rectified linear unit, softmax, or hyperbolic tangent). In various instances, the deep learning encoder can be trained in unsupervised fashion using an encoding-decoding pipeline, so as to be able to compress inputted driving condition data into a latent vector. In various aspects, the control component 116 can execute the deep learning encoder on the real-time driving condition data captured by the set of vehicle sensors 104, thereby yielding a particular latent vector. In various instances, the control component 116 can also execute the deep learning encoder on each of the collection of driving condition data that the machine learning model was trained on, thereby yielding a distribution of training latent vectors. If the particular latent vector fits well within (e.g., has a more than a threshold probability of belonging to) the distribution of training latent vectors, the control component 116 can infer that the real-time driving condition data is sufficiently similar to the data on which the machine learning model was trained. Accordingly, the control component 116 can conclude that the real-time driving condition data does not represent an unexpected driving condition. On the other hand, if the particular latent vector fits poorly within (e.g., has a less than a threshold probability of belonging to) the distribution of training latent vectors, the control component 116 can infer that the real-time driving condition data is not sufficiently similar to the data on which the machine learning model was trained. Accordingly, the control component 116 can conclude that the real-time driving condition data represents an unexpected driving condition.

In any case, the control component 116 can respond to such unexpected driving condition by establishing the remote control link 402. As described above, upon establishment of the remote control link 402, the vehicle 102 can, in some cases, be considered as being remotely driven by the operator of the remote computing device 304(j). Accordingly, the operator of the remote computing device 304(j) can remotely drive the vehicle 102 so as to safely traverse the unexpected driving condition. In this way, unreliability of autonomous driving can be ameliorated.

Note that, in some aspects, rather than being based on an unexpected driving condition as described above, the link trigger 502 can instead be the detection or occurrence of any suitable dangerous driving condition (e.g., even if the machine learning model of the autonomous driving capabilities was previously trained on similar dangerous driving conditions). In such cases, the control component 116 can detect such dangerous driving condition by leveraging any suitable techniques (e.g., by leveraging a pre-trained machine learning classifier that is configured to receive as input driving condition data and to produce as output a classification label indicating whether or not the driving condition data represents a dangerous driving condition).

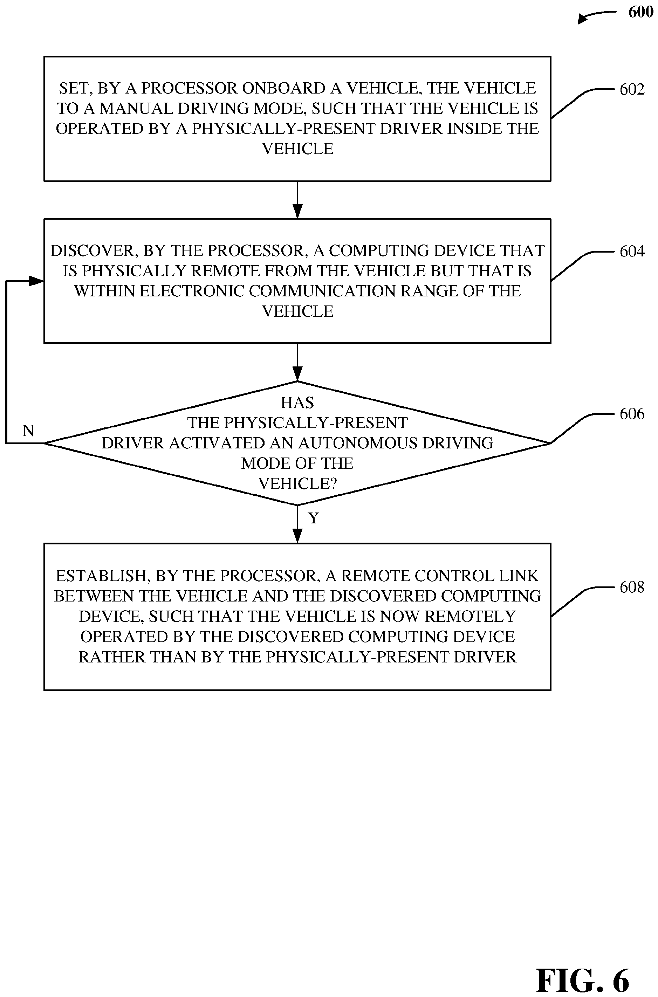

FIGs. 6-10 illustrate flow diagrams of example, non-limiting computer-implemented methods 600, 700, 800, 900, and 1000 that can facilitate triggering or initiation of semi-autonomous or pseudo-autonomous driving in accordance with one or more embodiments described herein. In various cases, the semi-autonomous driving system 108 can facilitate the computer-implemented methods 600, 700, 800, 900, and 1000.

First, consider FIG. 6. In various embodiments, act 602 can include setting, by a processor (e.g., via 110 and 116) onboard a vehicle (e.g., 102), the vehicle to a manual driving mode, such that the vehicle is operated by a physically-present driver inside the vehicle.

In various aspects, act 604 can include discovering, by the processor (e.g., via 110 and 114), a computing device (e.g., 304(j)) that is physically remote from the vehicle but that is within electronic communication range of the vehicle.

In various instances, act 606 can include determining, by the processor (e.g., via 110 and 116), whether the physically-present driver has activated an autonomous driving mode of the vehicle. If not, the computer-implemented method 600 can proceed back to act 604. If so, the computer-implemented method 600 can instead proceed to act 608.

In various cases, act 608 can include establishing, by the processor (e.g., via 110 and 116), a remote control link (e.g., 402) between the vehicle and the discovered computing device, such that the vehicle is now remotely operated by the discovered computing device rather than manually operated by the physically-present driver.

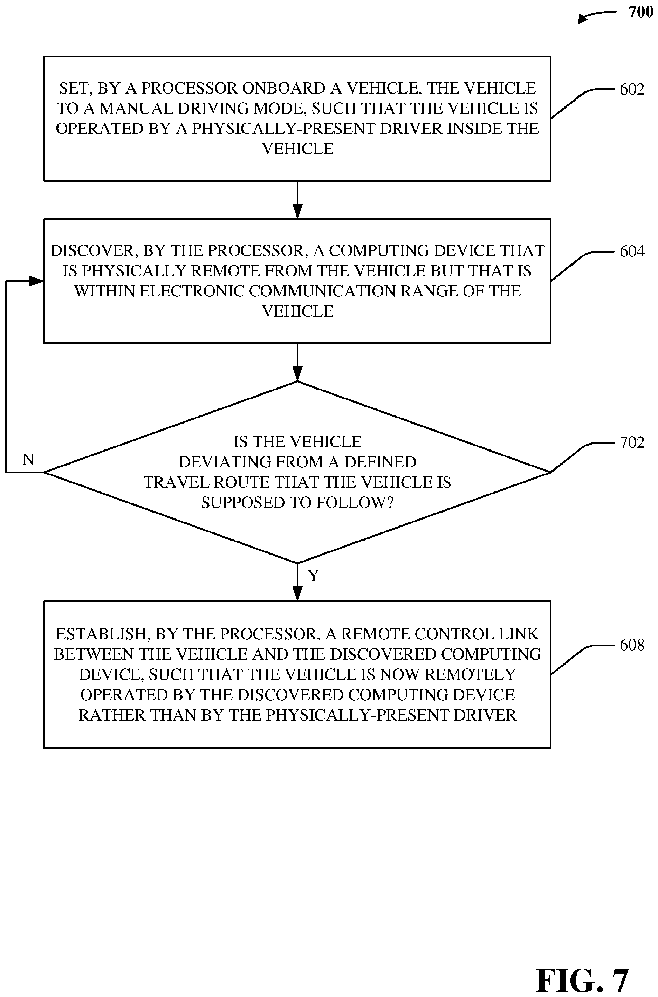

Now, consider FIG. 7. In various embodiments, as shown, the computer-implemented method 700 can comprise acts 602, 604, and 608. However, rather than act 606, the computer-implemented method 700 can instead comprise act 702. In various aspects, act 702 can include determining, by the processor (e.g., via 110 and 116), whether the vehicle is deviating from a defined travel route that the vehicle is supposed to follow. If not, the computer-implemented method 700 can proceed back to act 604. If so, the computer-implemented method 700 can instead proceed to act 608.

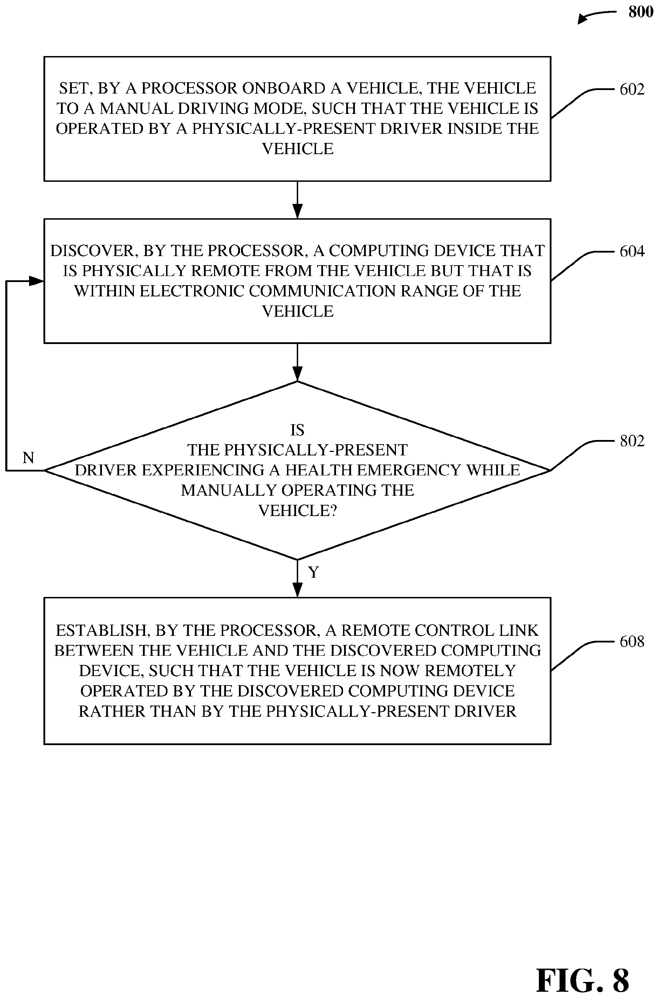

Now, consider FIG. 8. In various embodiments, as shown, the computer-implemented method 800 can comprise acts 602, 604, and 608. However, rather than acts 606 or 702, the computer-implemented method 800 can instead comprise act 802. In various aspects, act 802 can include determining, by the processor (e.g., via 110 and 116), whether the physically-present driver is experiencing a health emergency while manually operating the vehicle. If not, the computer-implemented method 800 can proceed back to act 604. If so, the computer-implemented method 800 can instead proceed to act 608.

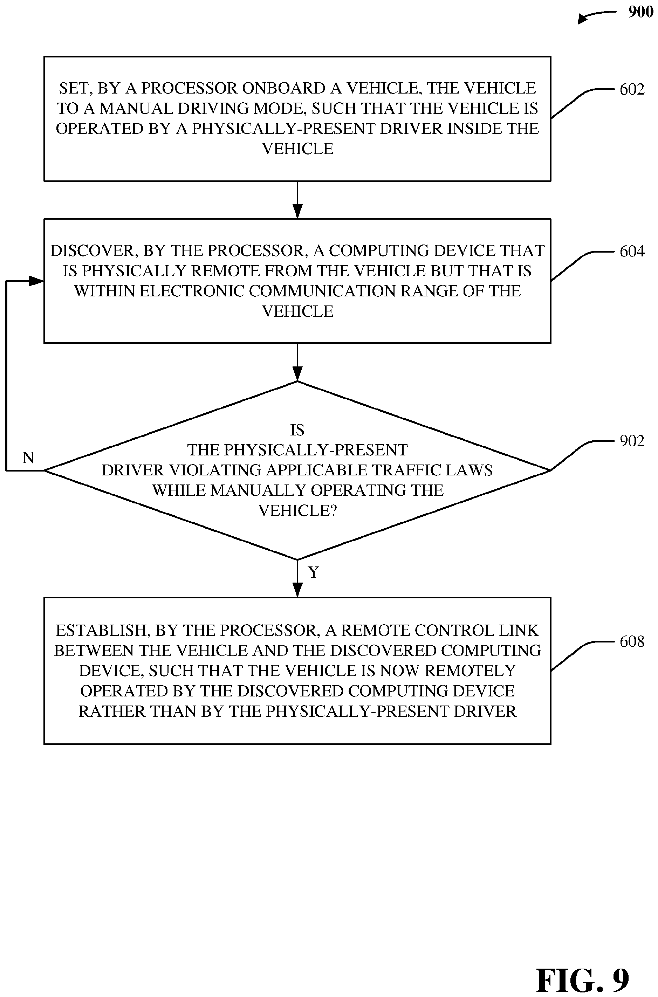

Now, consider FIG. 9. In various embodiments, as shown, the computer-implemented method 900 can comprise acts 602, 604, and 608. However, rather than acts 606, 702, or 802, the computer-implemented method 900 can instead comprise act 902. In various aspects, act 902 can include determining, by the processor (e.g., via 110 and 116), whether the physically-present driver is violating any applicable traffic laws while manually operating the vehicle. If not, the computer-implemented method 900 can proceed back to act 604. If so, the computer-implemented method 900 can instead proceed to act 608.

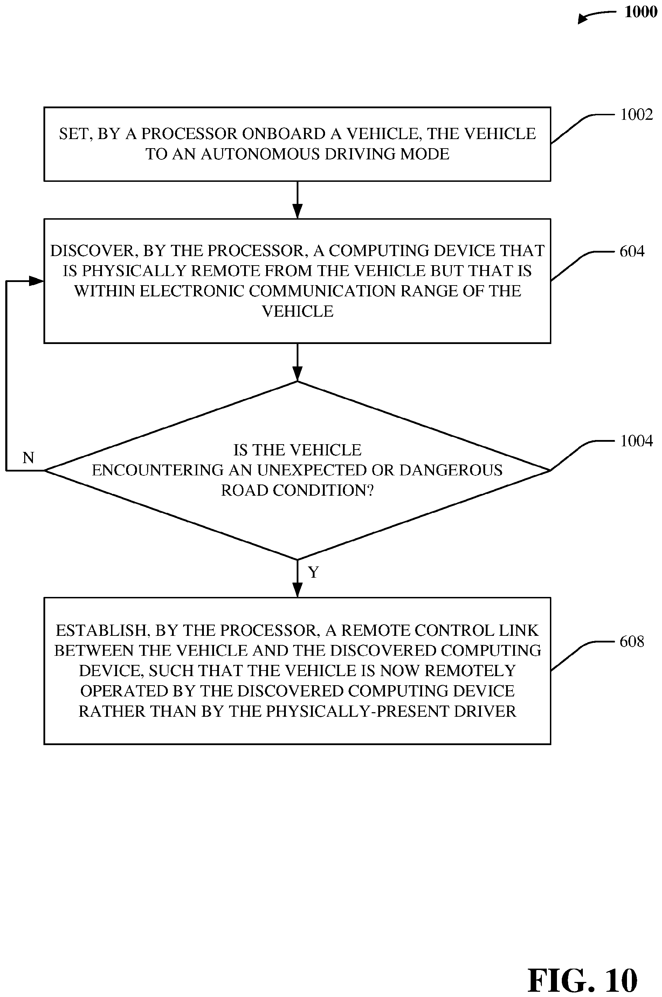

Now, consider FIG. 10. In various embodiments, as shown, the computer-implemented method 1000 can comprise acts 604 and 608. However, rather than act 602, the computer-implemented method 1000 can instead comprise act 1002. In various aspects, act 1002 can include setting, by a processor (e.g., via 110 and 116) onboard a vehicle (e.g., 102), the vehicle to an autonomous driving mode.

In various instances, rather than acts 606, 702, 802, or 902, the computer-implemented method 1000 can comprise act 1004. In various aspects, act 1004 can include determining, by the processor (e.g., via 110 and 116), whether the vehicle is experiencing an unexpected or dangerous driving condition. If not, the computer-implemented method 1000 can proceed back to act 604. If so, the computer-implemented method 1000 can instead proceed to act 608.

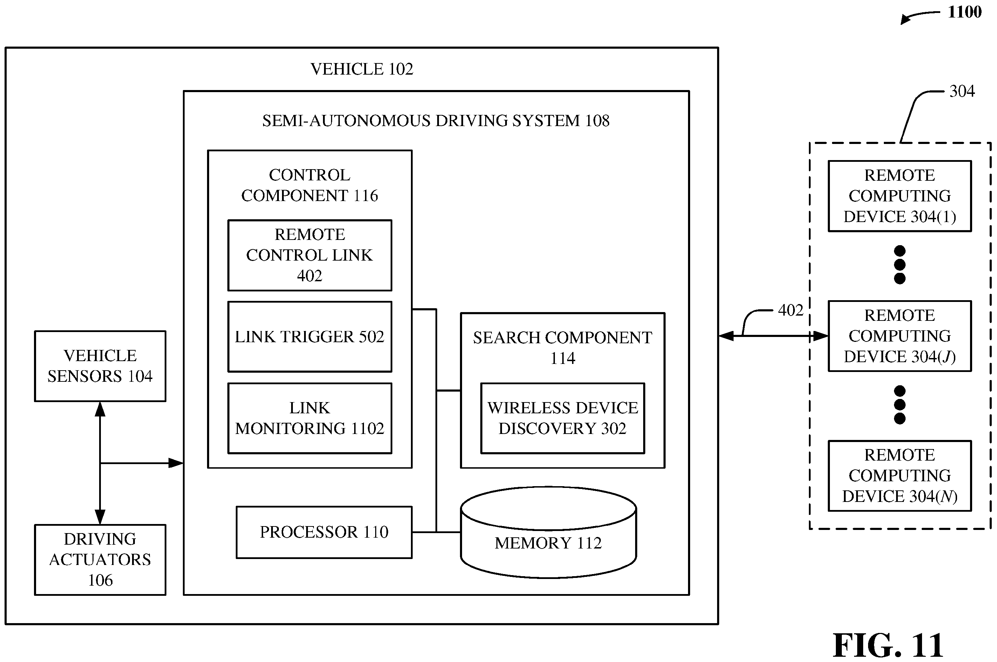

FIG. 11 illustrates a block diagram of an example, non-limiting system 1100 including a link monitoring procedure that can facilitate semi-autonomous or pseudo-autonomous driving in accordance with one or more embodiments described herein. As shown, the system 1100 can, in some cases, comprise link monitoring 1102.

In various embodiments, after establishing the remote control link 402, the control component 116 can continuously, continually, periodically, regularly, or irregularly perform the link monitoring 1102. In various aspects, the link monitoring 1102 can be any suitable procedure, computation, or analysis that involves assessing a quality of the remote control link 402. As a non-limiting example, the link monitoring 1102 can involve measuring (e.g., via any suitable electronic communication-related sensors) a signal strength exhibited by the remote control link 402 and comparing that signal strength (which can change over time) to any suitable thresholds. As another non-limiting example, the link monitoring 1102 can involve measuring (e.g., via any suitable electronic communication-related sensors) a temporal latency exhibited by the remote control link 402 and comparing that temporal latency (which can change over time) to any suitable thresholds. These are mere non-limiting examples. In other aspects, the link monitoring 1102 can involve measuring any other suitable property, characteristic, or attribute of the remote control link 402 and comparing that property, characteristic, or attribute (which can change over time) to any suitable thresholds. In various cases, the control component 116 can perform any suitable electronic actions, based on the link monitoring 1102.

As a non-limiting example, the control component 116 can electronically generate an alert or warning, based on the link monitoring 1102. For instance, suppose that the link monitoring 1102 indicates that the signal strength or temporal latency satisfies any suitable threshold (e.g., the signal strength is not too low, the temporal latency is not too high). The control component 116 can accordingly refrain from generating an alert or warning. However, suppose instead that the link monitoring 1102 indicates that the signal strength or temporal latency fails to satisfy any suitable threshold (e.g., the signal strength can be too low, the temporal latency can be too high). The control component 116 can accordingly generate an alert or warning, where such alert or warning indicates that the remote control link 402 might soon be lost. In some cases, the control component 116 can transmit the alert or warning, via the remote control link 402, to the remote computing device 304(j), so that the operator of the remote computing device 304(j) is made aware that the remote control link 402 might soon go down. In some instances, the control component 116 can visually render the alert or warning on any suitable electronic display of the vehicle 102, so that the passenger physically riding in the vehicle 102 is made aware that the remote control link 402 might soon go down (e.g., that the passenger might have to resume manually driving the vehicle 102 in the near future).

As another non-limiting example, the control component 116 can electronically cause the vehicle 102 to enter a caution mode, based on the link monitoring 1102. For instance, suppose that the link monitoring 1102 indicates that the signal strength or temporal latency satisfies any suitable threshold (e.g., the signal strength is not too low, the temporal latency is not too high). The control component 116 can accordingly refrain from causing the vehicle 102 to enter into the caution mode. However, suppose instead that the link monitoring 1102 indicates that the signal strength or temporal latency fails to satisfy any suitable threshold (e.g., the signal strength can be too low, the temporal latency can be too high). The control component 116 can accordingly cause the vehicle 102 to enter into the caution mode, where the caution mode can involve automatically performing any suitable automated safety actions. In some cases, the caution mode can include causing the set of driving actuators 106 to reduce a traveling speed of the vehicle 102 by any suitable amount or percentage. In other cases, the caution mode can include causing the set of driving actuators 106 to increase a following distance of the vehicle 102 by any suitable amount or percentage (e.g., to increase how much distance is between the vehicle 102 and some other vehicle that is in front of, beside, or behind the vehicle 102). In yet other cases, the caution mode can include causing the vehicle 102 to reroute spare electricity away from any non-critical components (e.g., compact disc player, seat heater, cigarette lighter) and toward the remote control link 402. Such rerouting of spare electricity can be considered as an attempt to improve the quality of the remote control link 402 (e.g., to increase its signal strength or to decrease its temporal latency).

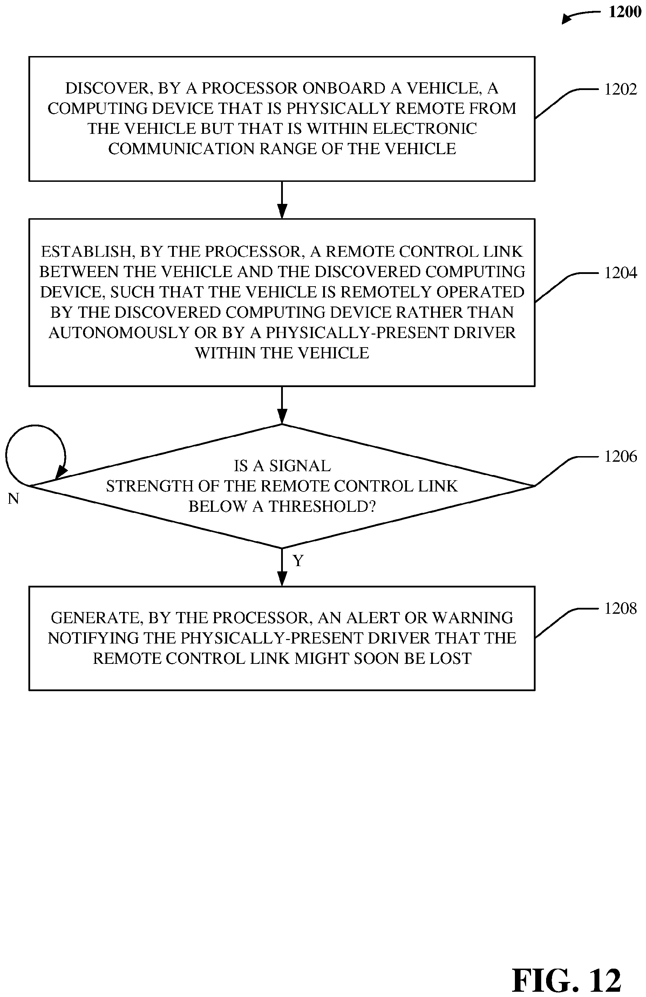

FIGs. 12-13 illustrate flow diagrams of example, non-limiting computer-implemented methods 1200 and 1300 that can facilitate monitoring of semi-autonomous or pseudo-autonomous driving in accordance with one or more embodiments described herein. In various cases, the semi-autonomous driving system 108 can facilitate the computer-implemented methods 1200 and 1300.

First, consider FIG. 12. In various embodiments, act 1202 can include discovering, by the processor (e.g., via 110 and 114), a computing device (e.g., 304(j)) that is physically remote from the vehicle but that is within electronic communication range of the vehicle.

In various aspects, act 1204 can include establishing, by the processor (e.g., via 110 and 116), a remote control link (e.g., 402) between the vehicle and the discovered computing device, such that the vehicle is now remotely operated by the discovered computing device, rather than autonomously or manually operated by the physically-present driver.

In various instances, act 1206 can include determining, by the processor (e.g., via 110 and 116), whether a signal strength of the remote control link is below a threshold. If not, the computer-implemented method 1200 can proceed back to act 1206. If so, the computer-implemented method 1200 can instead proceed to act 1208.

In various cases, act 1208 can include generating, by the processor (e.g., via 110 and 116), an alert or warning notifying the physically-present driver that the remote control link might soon be lost.

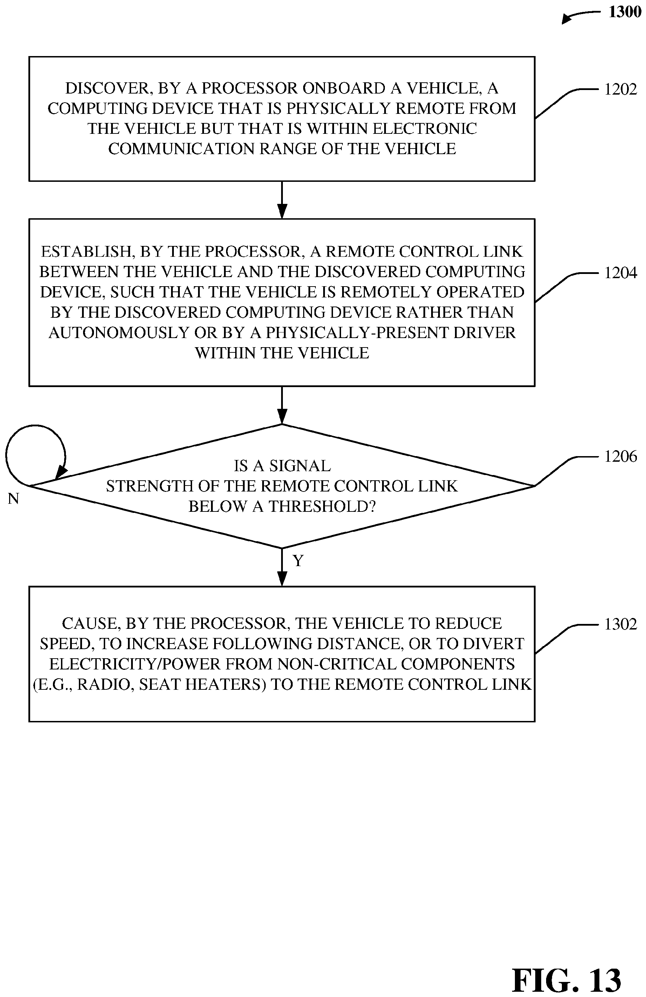

Now, consider FIG. 13. In various embodiments, as shown, the computer-implemented method 1300 can comprise acts 1202, 1204, and 1206. However, rather than act 1208, the computer-implemented method 1300 can instead comprise act 1302. In various aspects, act 1302 can include causing, by the processor (e.g., via 110 and 116), the vehicle to reduce speed, to increase following distance, or to divert electricity or power from non-critical component of the vehicle to the remote control link.

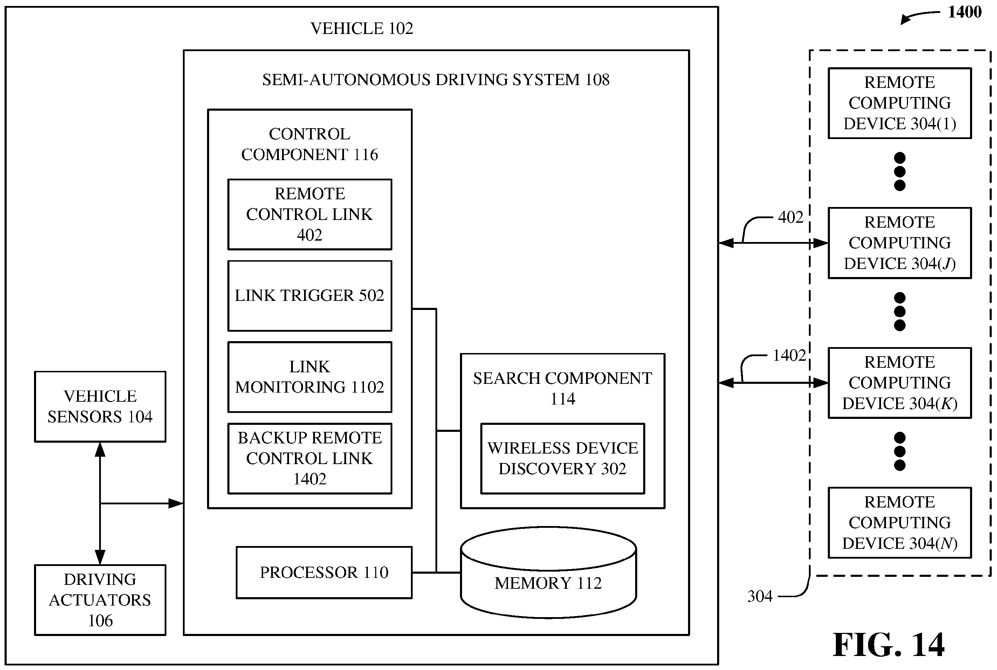

FIG. 14 illustrates a block diagram of an example, non-limiting system 1400 including a backup remote control link that can facilitate semi-autonomous or pseudo-autonomous driving in accordance with one or more embodiments described herein. As shown, the system 1400 can, in some cases, comprise the same components as the system 1100, and can further comprise a backup remote control link 1402.

In various embodiments, the control component 116 can, based on the link monitoring 1102, electronically create, electronically form, or otherwise electronically establish the backup remote control link 1402 between the vehicle 102 and a remote computing device 304(A), for any suitable positive integer 1 ≤ *k* ≤ *n* where *j* ≠ *k* (e.g., in some cases, *j < k;* in other cases, *j > k*). In various aspects, the backup remote control link 1402 can be like the remote control link 402. Accordingly, the backup remote control link 1402 can be any suitable wireless electronic communication channel that enables electronic data to be transmitted from the vehicle 102 to the remote computing device 304(k), or that enables electronic data to be transmitted from the remote computing device 304(k) to the vehicle 102.

In various aspects, the control component 116 can prepare the backup remote control link 1402, in response to the link monitoring 1102 indicating that the remote control link 402 has degraded past a first (e.g., moderate) threshold but has not yet degraded past a second (e.g., severe) threshold. As a non-limiting example, the link monitoring 1102 can indicate that the signal strength of the remote control link 402 has dropped below a first strength threshold value but has not yet dropped below a second strength threshold value, where the second strength threshold value is lower than the first strength threshold value (e.g., lower strength is worse or more severe). As another non-limiting example, the link monitoring 1102 can indicate that the temporal latency of the remote control link 402 has grown beyond a first latency threshold value but has not yet grown beyond a second latency threshold value, where the second latency threshold value is higher than the first latency threshold value (e.g., higher latency is worse or more severe). In either case, the control component 116 can determine that the remote control link 402 has suffered some, but not extensive, degradation. In response to such determination, the control component 116 can create or establish the backup remote control link 1402 such that the vehicle 102 can communicate with the remote computing device 304(*k*), but the control component 116 can refrain from delegating driving authority to the remote computing device 304(*k*). In other words, when the remote control link 402 experiences only mild to moderate degradation, the remote computing device 304(*j*) can remain in control of the vehicle 102; the backup remote control link 1402 can be created as a redundant safety net just in case the remote control link 402 suffers further degradation, but the remote computing device 304(*k*) cannot yet remotely control the vehicle 102.

At some point in time, the link monitoring 1102 can indicate that the remote control link 402 has degraded past both the first (e.g., moderate) threshold and the second (e.g., severe) threshold. As a non-limiting example, the link monitoring 1102 can indicate that the signal strength of the remote control link 402 has dropped below both the first strength threshold value and the second strength threshold value. As another non-limiting example, the link monitoring 1102 can indicate that the temporal latency of the remote control link 402 has grown beyond both the first latency threshold value and the second latency threshold value. In either case, the control component 116 can determine that the remote control link 402 has suffered excessive degradation. In response to such determination, the control component 116 can revoke the driving authority of the remote computing device 304(*j*) and can grant driving authority to the remote computing device 304(*k*). In other words, when the remote control link 402 experiences severe degradation, the remote computing device 304(*k*) can be put in control of the vehicle 102, and the remote computing device 304(*j*) can no longer have control over the vehicle 102. In some cases, this can involve terminating the remote control link 402. In various aspects, this can be considered as a make-before-break redundancy protocol implemented by the control component 116.

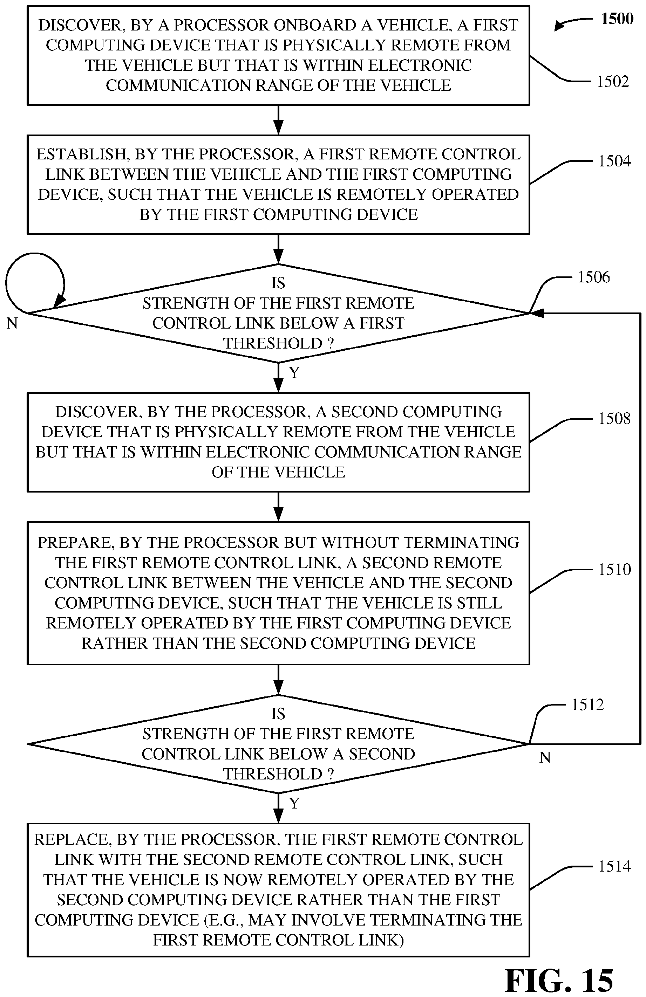

FIG. 15 illustrates a flow diagram of an example, non-limiting computer-implemented method 1500 that can facilitate backups for semi-autonomous or pseudo-autonomous driving in accordance with one or more embodiments described herein. In various cases, the semi-autonomous driving system 108 can facilitate the computer-implemented method 1500.

In various embodiments, act 1502 can include discovering, by the processor (e.g., via 110 and 114), a first computing device (e.g., 304(*j*)) that is physically remote from the vehicle but that is within electronic communication range of the vehicle.

In various aspects, act 1504 can include establishing, by the processor (e.g., via 110 and 116), a first remote control link (e.g., 402) between the vehicle and the first computing device, such that the vehicle is now remotely operated by the first computing device.

In various instances, act 1506 can include determining, by the processor (e.g., via 110 and 116), whether a signal strength of the first remote control link is below a first threshold. If not, the computer-implemented method 1500 can proceed back to act 1506. If so, the computer-implemented method 1500 can instead proceed to act 1508.

In various cases, act 1508 can include discovering, by the processor (e.g., via 110 and 114), a second computing device (e.g., 304(*k*)) that is physically remote from the vehicle but that is within electronic communication range of the vehicle.

In various aspects, act 1510 can include preparing, by the processor (e.g., via 110 and 116) but without terminating the first remote control link, a second remote control link (e.g., 1402) between the vehicle and the second computing device, such that the vehicle is still remotely operated by the first computing device rather than by the second computing device.

In various instances, act 1512 can include determining, by the processor (e.g., via 110 and 116), whether a signal strength of the first remote control link is below a second threshold, where the second threshold is lower than the first threshold. If not, the computer-implemented method 1500 can proceed back to act 1506. If so, the computer-implemented method 1500 can instead proceed to act 1514.

In various cases, act 1514 can include replacing, by the processor (e.g., via 110 and 116), the first remote control link with the second remote control link, such that the vehicle is now remotely operated by the second computing device rather than the first computing device.

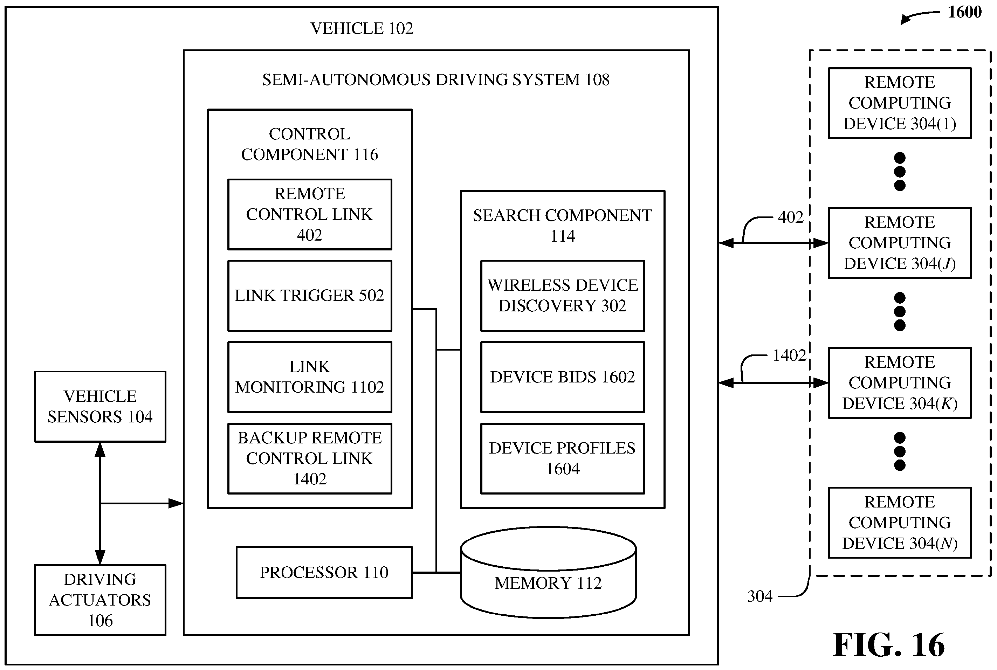

FIG. 16 illustrates a block diagram of an example, non-limiting system 1600 including one or more device bids or one or more device profiles that can facilitate semi-autonomous or pseudo-autonomous driving in accordance with one or more embodiments described herein. As shown, the system 1600 can, in some cases, comprise the same components as the system 1400, and can further comprise a set of device bids 1602 or a set of device profiles 1604.

In various embodiments, the set of device bids 1602 can respectively correspond (e.g., in one-to-one fashion) with the set of remote computing devices 304. In particular, each of the set of remote computing devices 304 can, in response to having been discovered during the wireless device discovery 302, transmit to the search component 114 a respective one of the set of device bids 1602. In various aspects, each of the set of device bids 1602 can be any suitable electronic data that indicates, specifies, or otherwise represents a financial or monetary price to be charged by the operator of a respective one of the set of remote computing devices 304 for rendition of remote driving services to the vehicle 102. Accordingly, the control component 116 can utilize the set of device bids 1602 when deciding which of the set of remote computing devices 304 to link to. As a non-limiting example, the remote computing device 304(*j*) can have submitted a minimum or lowest bid in the set of device bids 1602. Accordingly, the control component 116 can have established the remote control link 402 with the remote computing device 304(*j*) due to such minimum or lowest bid.

In various embodiments, the set of device profiles 1604 can respectively correspond (e.g., in one-to-one fashion) with the set of remote computing devices 304. In particular, each of the set of remote computing devices 304 can, in response to having been discovered during the wireless device discovery 302, transmit to the search component 114 a respective one of the set of device profiles 1604. In various aspects, each of the set of device profiles 1604 can be any suitable electronic data that indicates, specifies, or otherwise represents how well or how poorly the operator of a respective one of the set of remote computing devices 304 has historically rendered remote driving services in the past. As some non-limiting examples, each of the device profiles 1604 can indicate: prior remote passenger reviews or ratings that have been assigned to the operator of a respective one of the set of remote computing devices 304; prior remote passenger complaints that that have been lodged against the operator of a respective one of the set of remote computing devices 304; or prior professional or criminal background information that is associated with the operator of a respective one of the set of remote computing devices 304. Accordingly, the control component 116 can utilize the set of device profiles 1604 when deciding which of the set of remote computing devices 304 to link to. As a non-limiting example, the remote computing device 304(*j*) can have the highest prior remote passenger ratings or most positive prior remote passenger reviews indicated by the set of device profiles 1604. Accordingly, the control component 116 can have established the remote control link 402 with the remote computing device 304(*j*) due to such highest ratings or most positive reviews.

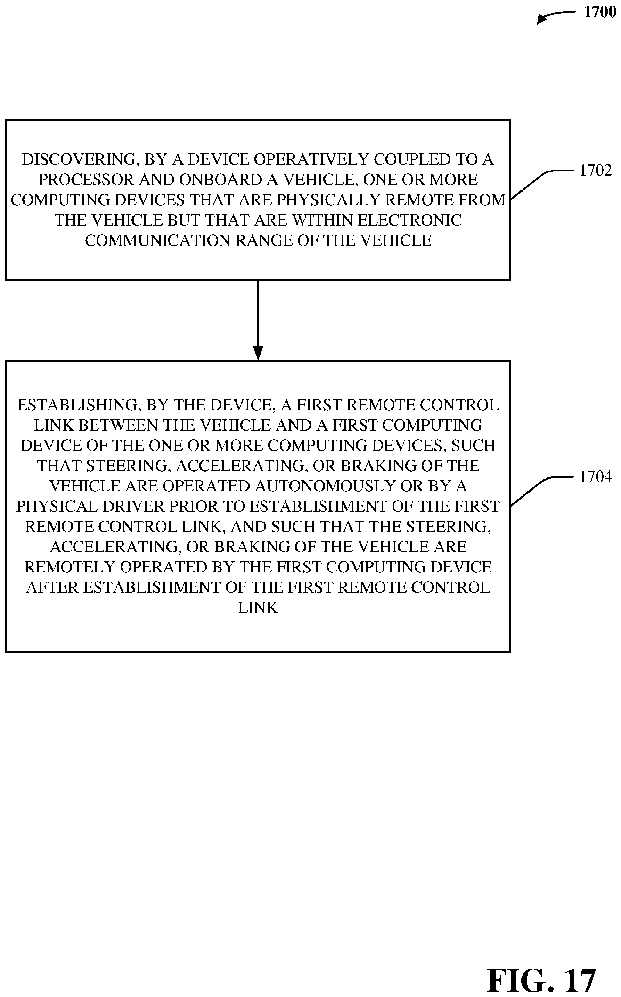

FIG. 17 illustrates a flow diagram of an example, non-limiting computer-implemented method 1700 that can facilitate semi-autonomous or pseudo-autonomous driving in accordance with one or more embodiments described herein. In various cases, the semi-autonomous driving system 108 can facilitate the computer-implemented method 1700.

In various embodiments, act 1702 can include discovering, by a device (e.g., via 114) operatively coupled to a processor (e.g., 110) and onboard a vehicle (e.g., 102), one or more computing devices (e.g., 304) that are physically remote from the vehicle but that are within electronic communication range of the vehicle.

In various aspects, act 1704 can include establishing, by the device (e.g., via 116), a first remote control link (e.g., 402) between the vehicle and a first computing device (e.g., 304(*j*)) of the one or more computing devices, such that steering, accelerating, or braking of the vehicle are operated autonomously or by a physical driver prior to establishment of the first remote control link, and such that the steering, accelerating, or braking of the vehicle are remotely operated by the first computing device after establishment of the first remote control link.

Although not explicitly shown in FIG. 17, the steering, accelerating, or braking of the vehicle can be operated by the physical driver prior to establishment of the first remote control link, and the device can establish the first remote control link in response to selection of an autonomous driving mode of the vehicle by the physical driver (e.g., as described with respect to FIGs. 5 and 6).

Although not explicitly shown in FIG. 17, the steering, accelerating, or braking of the vehicle can be operated by the physical driver prior to establishment of the first remote control link, and the device can establish the first remote control link in response to the vehicle deviating from a defined travel route (e.g., as described with respect to FIGs. 5 and 7).

Although not explicitly shown in FIG. 17, the steering, accelerating, or braking of the vehicle can be operated by the physical driver prior to establishment of the first remote control link, and the device can establish the first remote control link in response to detection of a health emergency of the physical driver (e.g., as described with respect to FIGs. 5 and 8).

Although not explicitly shown in FIG. 17, the steering, accelerating, or braking of the vehicle can be operated autonomously prior to establishment of the first remote control link, and the device can establish the first remote control link in response to detection of an unexpected road condition encountered by the vehicle (e.g., as described with respect to FIGs. 5 and 10).

Although not explicitly shown in FIG. 17, the computer-implemented method 1700 can comprise: monitoring, by the device (e.g., via 116), a signal strength of the first remote control link; and generating, by the device (e.g., via 116), an electronic alert in response to the signal strength of the first remote control link falling below a threshold (e.g., as described with respect to FIG. 12).

Although not explicitly shown in FIG. 17, the computer-implemented method 1700 can comprise: monitoring, by the device (e.g., via 116), a signal strength of the first remote control link; and causing, by the device (e.g., via 116), the vehicle to enter a caution mode in response to the signal strength of the first remote control link falling below a threshold, wherein the caution mode includes reducing speed of the vehicle, increasing following distance of the vehicle, or diverting power in the vehicle to the first remote control link (e.g., as described with respect to FIG. 13).

Although not explicitly shown in FIG. 17, the computer-implemented method 1700 can comprise: monitoring, by the device (e.g., via 116), a signal strength of the first remote control link; in response to the signal strength being below a first threshold, preparing, by the device (e.g., via 116) and as a redundant backup, a second remote control link (e.g., 1402) between the vehicle and a second computing device (e.g., 304(k)) of the one or more computing devices, without terminating the first remote control link; and in response to the signal strength being below a second threshold that is less than the first threshold, establishing, by the device (e.g., via 116), the second remote control link and terminating the first remote control link.

In various instances, machine learning algorithms or models can be implemented in any suitable way to facilitate any suitable aspects described herein. To facilitate some of the above-described machine learning aspects of various embodiments, consider the following discussion of artificial intelligence (AI). Various embodiments described herein can employ artificial intelligence to facilitate automating one or more features or functionalities. The components can employ various AI-based schemes for carrying out various embodiments/examples disclosed herein. In order to provide for or aid in the numerous determinations (e.g., determine, ascertain, infer, calculate, predict, prognose, estimate, derive, forecast, detect, compute) described herein, components described herein can examine the entirety or a subset of the data to which it is granted access and can provide for reasoning about or determine states of the system or environment from a set of observations as captured via events or data. Determinations can be employed to identify a specific context or action, or can generate a probability distribution over states, for example. The determinations can be probabilistic; that is, the computation of a probability distribution over states of interest based on a consideration of data and events. Determinations can also refer to techniques employed for composing higher-level events from a set of events or data.

Such determinations can result in the construction of new events or actions from a set of observed events or stored event data, whether or not the events are correlated in close temporal proximity, and whether the events and data come from one or several event and data sources. Components disclosed herein can employ various classification (explicitly trained (e.g., via training data) as well as implicitly trained (e.g., via observing behavior, preferences, historical information, receiving extrinsic information, and so on)) schemes or systems (e.g., support vector machines, neural networks, expert systems, Bayesian belief networks, fuzzy logic, data fusion engines, and so on) in connection with performing automatic or determined action in connection with the claimed subject matter. Thus, classification schemes or systems can be used to automatically learn and perform a number of functions, actions, or determinations.

A classifier can map an input attribute vector, z = (z₁, z₂, z₃, z₄, z*ₙ*), to a confidence that the input belongs to a class, as by f(z) = *confidence*(*class*). Such classification can employ a probabilistic or statistical-based analysis (e.g., factoring into the analysis utilities and costs) to determinate an action to be automatically performed. A support vector machine (SVM) can be an example of a classifier that can be employed. The SVM operates by finding a hyper-surface in the space of possible inputs, where the hyper-surface attempts to split the triggering criteria from the non-triggering events. Intuitively, this makes the classification correct for testing data that is near, but not identical to training data. Other directed and undirected model classification approaches include, e.g., naive Bayes, Bayesian networks, decision trees, neural networks, fuzzy logic models, or probabilistic classification models providing different patterns of independence, any of which can be employed. Classification as used herein also is inclusive of statistical regression that is utilized to develop models of priority.

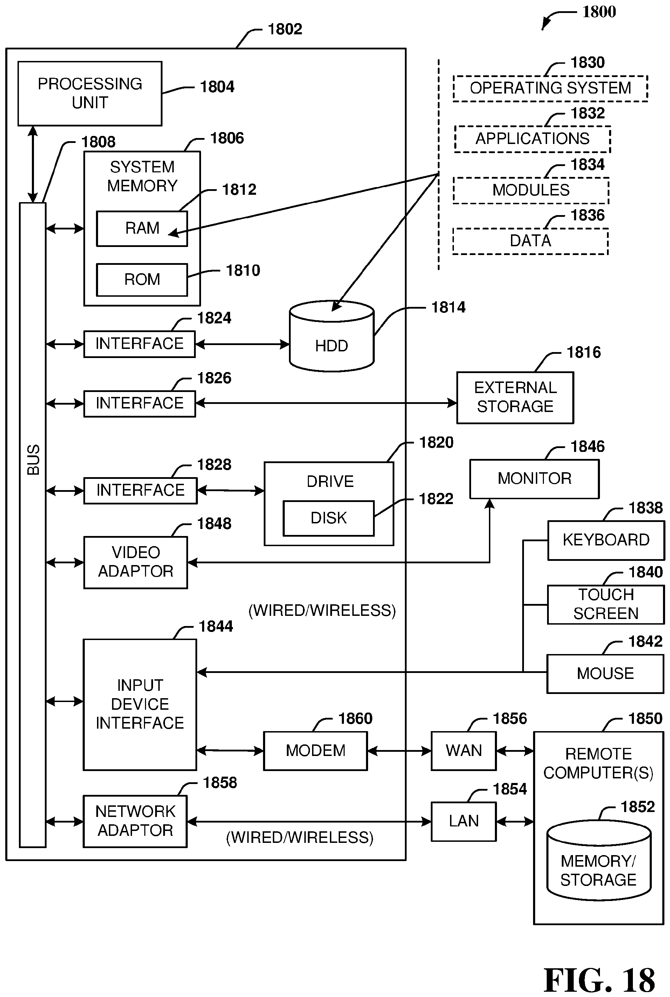

In order to provide additional context for various embodiments described herein, FIG. 18 and the following discussion are intended to provide a brief, general description of a suitable computing environment 1800 in which the various embodiments of the embodiment described herein can be implemented. While the embodiments have been described above in the general context of computer-executable instructions that can run on one or more computers, those skilled in the art will recognize that the embodiments can be also implemented in combination with other program modules or as a combination of hardware and software.

Generally, program modules include routines, programs, components, data structures, etc., that perform particular tasks or implement particular abstract data types. Moreover, those skilled in the art will appreciate that the inventive methods can be practiced with other computer system configurations, including single-processor or multi-processor computer systems, minicomputers, mainframe computers, Internet of Things (IoT) devices, distributed computing systems, as well as personal computers, hand-held computing devices, microprocessor-based or programmable consumer electronics, and the like, each of which can be operatively coupled to one or more associated devices.

The illustrated embodiments of the embodiments herein can be also practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data or unstructured data.

Computer-readable storage media can include, but are not limited to, random access memory (RAM), read only memory (ROM), electrically erasable programmable read only memory (EEPROM), flash memory or other memory technology, compact disk read only memory (CD-ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible or non-transitory media which can be used to store desired information. In this regard, the terms "tangible" or "non-transitory" herein as applied to storage, memory or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

With reference again to FIG. 18, the example environment 1800 for implementing various embodiments of the aspects described herein includes a computer 1802, the computer 1802 including a processing unit 1804, a system memory 1806 and a system bus 1808. The system bus 1808 couples system components including, but not limited to, the system memory 1806 to the processing unit 1804. The processing unit 1804 can be any of various commercially available processors. Dual microprocessors and other multi-processor architectures can also be employed as the processing unit 1804.

The system bus 1808 can be any of several types of bus structure that can further interconnect to a memory bus (with or without a memory controller), a peripheral bus, and a local bus using any of a variety of commercially available bus architectures. The system memory 1806 includes ROM 1810 and RAM 1812. A basic input/output system (BIOS) can be stored in a non-volatile memory such as ROM, erasable programmable read only memory (EPROM), EEPROM, which BIOS contains the basic routines that help to transfer information between elements within the computer 1802, such as during startup. The RAM 1812 can also include a high-speed RAM such as static RAM for caching data.

The computer 1802 further includes an internal hard disk drive (HDD) 1814 (e.g., EIDE, SATA), one or more external storage devices 1816 (e.g., a magnetic floppy disk drive (FDD) 1816, a memory stick or flash drive reader, a memory card reader, etc.) and a drive 1820, e.g., such as a solid state drive, an optical disk drive, which can read or write from a disk 1822, such as a CD-ROM disc, a DVD, a BD, etc. Alternatively, where a solid state drive is involved, disk 1822 would not be included, unless separate. While the internal HDD 1814 is illustrated as located within the computer 1802, the internal HDD 1814 can also be configured for external use in a suitable chassis (not shown). Additionally, while not shown in environment 1800, a solid state drive (SSD) could be used in addition to, or in place of, an HDD 1814. The HDD 1814, external storage device(s) 1816 and drive 1820 can be connected to the system bus 1808 by an HDD interface 1824, an external storage interface 1826 and a drive interface 1828, respectively. The interface 1824 for external drive implementations can include at least one or both of Universal Serial Bus (USB) and Institute of Electrical and Electronics Engineers (IEEE) 1394 interface technologies. Other external drive connection technologies are within contemplation of the embodiments described herein.

The drives and their associated computer-readable storage media provide nonvolatile storage of data, data structures, computer-executable instructions, and so forth. For the computer 1802, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 1812, including an operating system 1830, one or more application programs 1832, other program modules 1834 and program data 1836. All or portions of the operating system, applications, modules, or data can also be cached in the RAM 1812. The systems and methods described herein can be implemented utilizing various commercially available operating systems or combinations of operating systems.

Computer 1802 can optionally comprise emulation technologies. For example, a hypervisor (not shown) or other intermediary can emulate a hardware environment for operating system 1830, and the emulated hardware can optionally be different from the hardware illustrated in FIG. 18. In such an embodiment, operating system 1830 can comprise one virtual machine (VM) of multiple VMs hosted at computer 1802. Furthermore, operating system 1830 can provide runtime environments, such as the Java runtime environment or the.NET framework, for applications 1832. Runtime environments are consistent execution environments that allow applications 1832 to run on any operating system that includes the runtime environment. Similarly, operating system 1830 can support containers, and applications 1832 can be in the form of containers, which are lightweight, standalone, executable packages of software that include, e.g., code, runtime, system tools, system libraries and settings for an application.

Further, computer 1802 can be enable with a security module, such as a trusted processing module (TPM). For instance with a TPM, boot components hash next in time boot components, and wait for a match of results to secured values, before loading a next boot component. This process can take place at any layer in the code execution stack of computer 1802, e.g., applied at the application execution level or at the operating system (OS) kernel level, thereby enabling security at any level of code execution.

A user can enter commands and information into the computer 1802 through one or more wired/wireless input devices, e.g., a keyboard 1838, a touch screen 1840, and a pointing device, such as a mouse 1842. Other input devices (not shown) can include a microphone, an infrared (IR) remote control, a radio frequency (RF) remote control, or other remote control, a joystick, a virtual reality controller or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 1804 through an input device interface 1844 that can be coupled to the system bus 1808, but can be connected by other interfaces, such as a parallel port, an IEEE 1394 serial port, a game port, a USB port, an IR interface, a BLUETOOTH^{®} interface, etc.

A monitor 1846 or other type of display device can be also connected to the system bus 1808 via an interface, such as a video adapter 1848. In addition to the monitor 1846, a computer typically includes other peripheral output devices (not shown), such as speakers, printers, etc.

The computer 1802 can operate in a networked environment using logical connections via wired or wireless communications to one or more remote computers, such as a remote computer(s) 1850. The remote computer(s) 1850 can be a workstation, a server computer, a router, a personal computer, portable computer, microprocessor-based entertainment appliance, a peer device or other common network node, and typically includes many or all of the elements described relative to the computer 1802, although, for purposes of brevity, only a memory/storage device 1852 is illustrated. The logical connections depicted include wired/wireless connectivity to a local area network (LAN) 1854 or larger networks, e.g., a wide area network (WAN) 1856. Such LAN and WAN networking environments are commonplace in offices and companies, and facilitate enterprise-wide computer networks, such as intranets, all of which can connect to a global communications network, e.g., the Internet.

When used in a LAN networking environment, the computer 1802 can be connected to the local network 1854 through a wired or wireless communication network interface or adapter 1858. The adapter 1858 can facilitate wired or wireless communication to the LAN 1854, which can also include a wireless access point (AP) disposed thereon for communicating with the adapter 1858 in a wireless mode.

When used in a WAN networking environment, the computer 1802 can include a modem 1860 or can be connected to a communications server on the WAN 1856 via other means for establishing communications over the WAN 1856, such as by way of the Internet. The modem 1860, which can be internal or external and a wired or wireless device, can be connected to the system bus 1808 via the input device interface 1844. In a networked environment, program modules depicted relative to the computer 1802 or portions thereof, can be stored in the remote memory/storage device 1852. It will be appreciated that the network connections shown are example and other means of establishing a communications link between the computers can be used.

When used in either a LAN or WAN networking environment, the computer 1802 can access cloud storage systems or other network-based storage systems in addition to, or in place of, external storage devices 1816 as described above, such as but not limited to a network virtual machine providing one or more aspects of storage or processing of information. Generally, a connection between the computer 1802 and a cloud storage system can be established over a LAN 1854 or WAN 1856 e.g., by the adapter 1858 or modem 1860, respectively. Upon connecting the computer 1802 to an associated cloud storage system, the external storage interface 1826 can, with the aid of the adapter 1858 or modem 1860, manage storage provided by the cloud storage system as it would other types of external storage. For instance, the external storage interface 1826 can be configured to provide access to cloud storage sources as if those sources were physically connected to the computer 1802.

The computer 1802 can be operable to communicate with any wireless devices or entities operatively disposed in wireless communication, e.g., a printer, scanner, desktop or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH^{®} wireless technologies. Thus, the communication can be a predefined structure as with a conventional network or simply an ad hoc communication between at least two devices.

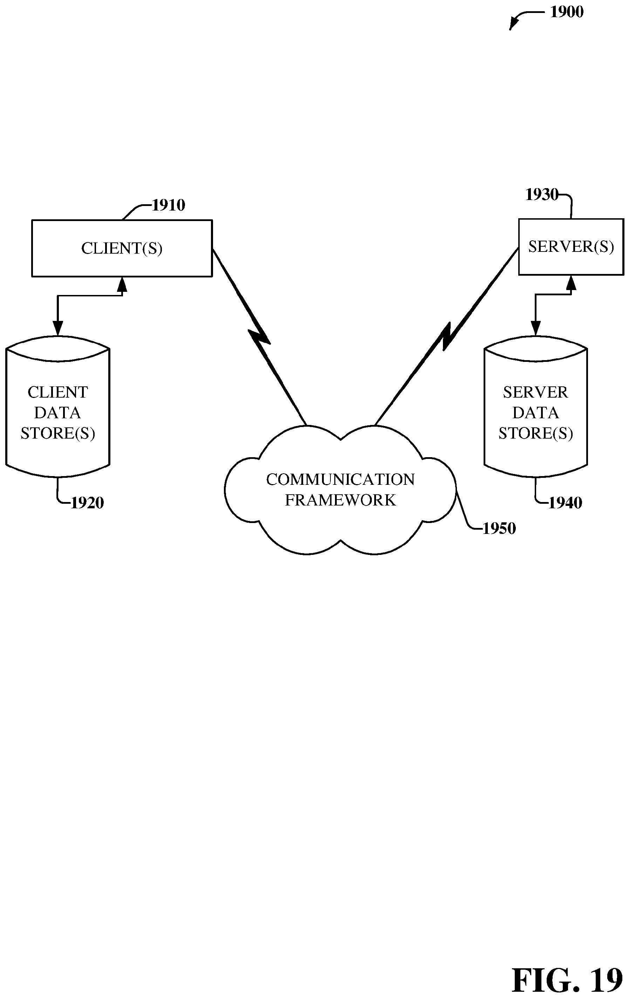

FIG. 19 is a schematic block diagram of a sample computing environment 1900 with which the disclosed subject matter can interact. The sample computing environment 1900 includes one or more client(s) 1910. The client(s) 1910 can be hardware or software (e.g., threads, processes, computing devices). The sample computing environment 1900 also includes one or more server(s) 1930. The server(s) 1930 can also be hardware or software (e.g., threads, processes, computing devices). The servers 1930 can house threads to perform transformations by employing one or more embodiments as described herein, for example. One possible communication between a client 1910 and a server 1930 can be in the form of a data packet adapted to be transmitted between two or more computer processes. The sample computing environment 1900 includes a communication framework 1950 that can be employed to facilitate communications between the client(s) 1910 and the server(s) 1930. The client(s) 1910 are operably connected to one or more client data store(s) 1920 that can be employed to store information local to the client(s) 1910. Similarly, the server(s) 1930 are operably connected to one or more server data store(s) 1940 that can be employed to store information local to the servers 1930.

Various embodiments may be a system, a method, an apparatus or a computer program product at any possible technical detail level of integration. The computer program product can include a computer readable storage medium (or media) having computer readable program instructions thereon for causing a processor to carry out aspects of various embodiments. The computer readable storage medium can be a tangible device that can retain and store instructions for use by an instruction execution device. The computer readable storage medium can be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium can also include the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network or a wireless network. The network can comprise copper transmission cables, optical transmission fibers, wireless transmission, routers, firewalls, switches, gateway computers or edge servers. A network adapter card or network interface in each computing/processing device receives computer readable program instructions from the network and forwards the computer readable program instructions for storage in a computer readable storage medium within the respective computing/processing device. Computer readable program instructions for carrying out operations of various embodiments can be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. The computer readable program instructions can execute entirely on the user's computer, partly on the user's computer, as a stand-alone software package, partly on the user's computer and partly on a remote computer or entirely on the remote computer or server. In the latter scenario, the remote computer can be connected to the user's computer through any type of network, including a local area network (LAN) or a wide area network (WAN), or the connection can be made to an external computer (for example, through the Internet using an Internet Service Provider). In some embodiments, electronic circuitry including, for example, programmable logic circuitry, field-programmable gate arrays (FPGA), or programmable logic arrays (PLA) can execute the computer readable program instructions by utilizing state information of the computer readable program instructions to personalize the electronic circuitry, in order to perform various aspects.

Various aspects are described herein with reference to flowchart illustrations or block diagrams of methods, apparatus (systems), and computer program products according to various embodiments. It will be understood that each block of the flowchart illustrations or block diagrams, and combinations of blocks in the flowchart illustrations or block diagrams, can be implemented by computer readable program instructions. These computer readable program instructions can be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart or block diagram block or blocks. These computer readable program instructions can also be stored in a computer readable storage medium that can direct a computer, a programmable data processing apparatus, or other devices to function in a particular manner, such that the computer readable storage medium having instructions stored therein comprises an article of manufacture including instructions which implement aspects of the function/act specified in the flowchart or block diagram block or blocks. The computer readable program instructions can also be loaded onto a computer, other programmable data processing apparatus, or other device to cause a series of operational acts to be performed on the computer, other programmable apparatus or other device to produce a computer implemented process, such that the instructions which execute on the computer, other programmable apparatus, or other device implement the functions/acts specified in the flowchart or block diagram block or blocks.

The flowcharts and block diagrams in the Figures illustrate the architecture, functionality, and operation of possible implementations of systems, methods, and computer program products according to various embodiments. In this regard, each block in the flowchart or block diagrams can represent a module, segment, or portion of instructions, which comprises one or more executable instructions for implementing the specified logical function(s). In some alternative implementations, the functions noted in the blocks can occur out of the order noted in the Figures. For example, two blocks shown in succession can, in fact, be executed substantially concurrently, or the blocks can sometimes be executed in the reverse order, depending upon the functionality involved. It will also be noted that each block of the block diagrams or flowchart illustration, and combinations of blocks in the block diagrams or flowchart illustration, can be implemented by special purpose hardware-based systems that perform the specified functions or acts or carry out combinations of special purpose hardware and computer instructions.

While the subject matter has been described above in the general context of computer-executable instructions of a computer program product that runs on a computer or computers, those skilled in the art will recognize that this disclosure also can or can be implemented in combination with other program modules. Generally, program modules include routines, programs, components, data structures, etc. that perform particular tasks or implement particular abstract data types. Moreover, those skilled in the art will appreciate that various aspects can be practiced with other computer system configurations, including single-processor or multiprocessor computer systems, mini-computing devices, mainframe computers, as well as computers, hand-held computing devices (e.g., PDA, phone), microprocessor-based or programmable consumer or industrial electronics, and the like. The illustrated aspects can also be practiced in distributed computing environments in which tasks are performed by remote processing devices that are linked through a communications network. However, some, if not all aspects of this disclosure can be practiced on stand-alone computers. In a distributed computing environment, program modules can be located in both local and remote memory storage devices.

As used in this application, the terms "component," "system," "platform," "interface," and the like, can refer to or can include a computer-related entity or an entity related to an operational machine with one or more specific functionalities. The entities disclosed herein can be either hardware, a combination of hardware and software, software, or software in execution. For example, a component can be, but is not limited to being, a process running on a processor, a processor, an object, an executable, a thread of execution, a program, or a computer. By way of illustration, both an application running on a server and the server can be a component. One or more components can reside within a process or thread of execution and a component can be localized on one computer or distributed between two or more computers. In another example, respective components can execute from various computer readable media having various data structures stored thereon. The components can communicate via local or remote processes such as in accordance with a signal having one or more data packets (e.g., data from one component interacting with another component in a local system, distributed system, or across a network such as the Internet with other systems via the signal). As another example, a component can be an apparatus with specific functionality provided by mechanical parts operated by electric or electronic circuitry, which is operated by a software or firmware application executed by a processor. In such a case, the processor can be internal or external to the apparatus and can execute at least a part of the software or firmware application. As yet another example, a component can be an apparatus that provides specific functionality through electronic components without mechanical parts, wherein the electronic components can include a processor or other means to execute software or firmware that confers at least in part the functionality of the electronic components. In an aspect, a component can emulate an electronic component via a virtual machine, e.g., within a cloud computing system.

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. As used herein, the term "and/or" is intended to have the same meaning as "or." Moreover, articles "a" and "an" as used in the subject specification and annexed drawings should generally be construed to mean "one or more" unless specified otherwise or clear from context to be directed to a singular form. As used herein, the terms "example" or "exemplary" are utilized to mean serving as an example, instance, or illustration. For the avoidance of doubt, the subject matter disclosed herein is not limited by such examples. In addition, any aspect or design described herein as an "example" or "exemplary" is not necessarily to be construed as preferred or advantageous over other aspects or designs, nor is it meant to preclude equivalent exemplary structures and techniques known to those of ordinary skill in the art.

The herein disclosure describes non-limiting examples. For ease of description or explanation, various portions of the herein disclosure utilize the term "each," "every," or "all" when discussing various examples. Such usages of the term "each," "every," or "all" are non-limiting. In other words, when the herein disclosure provides a description that is applied to "each," "every," or "all" of some particular object or component, it should be understood that this is a non-limiting example, and it should be further understood that, in various other examples, it can be the case that such description applies to fewer than "each," "every," or "all" of that particular object or component.

As it is employed in the subject specification, the term "processor" can refer to substantially any computing processing unit or device comprising, but not limited to, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. Further, processors can exploit nano-scale architectures such as, but not limited to, molecular and quantum-dot based transistors, switches and gates, in order to optimize space usage or enhance performance of user equipment. A processor can also be implemented as a combination of computing processing units. In this disclosure, terms such as "store," "storage," "data store," data storage," "database," and substantially any other information storage component relevant to operation and functionality of a component are utilized to refer to "memory components," entities embodied in a "memory," or components comprising a memory. It is to be appreciated that memory or memory components described herein can be either volatile memory or nonvolatile memory, or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), flash memory, or nonvolatile random access memory (RAM) (e.g., ferroelectric RAM (FeRAM). Volatile memory can include RAM, which can act as external cache memory, for example. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM), and Rambus dynamic RAM (RDRAM). Additionally, the disclosed memory components of systems or computer-implemented methods herein are intended to include, without being limited to including, these and any other suitable types of memory.

What has been described above include mere examples of systems and computer-implemented methods. It is, of course, not possible to describe every conceivable combination of components or computer-implemented methods for purposes of describing this disclosure, but many further combinations and permutations of this disclosure are possible. Furthermore, to the extent that the terms "includes," "has," "possesses," and the like are used in the detailed description, claims, appendices and drawings such terms are intended to be inclusive in a manner similar to the term "comprising" as "comprising" is interpreted when employed as a transitional word in a claim.

The descriptions of the various embodiments have been presented for purposes of illustration, but are not intended to be exhaustive or limited to the embodiments disclosed. Many modifications and variations will be apparent without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

Various non-limiting aspects of various embodiments described herein are presented in the following clauses.

CLAUSE 1: A system, comprising: a vehicle; and a processor onboard the vehicle and that executes computer-executable components stored in a non-transitory computer-readable memory onboard the vehicle, the computer-executable components comprising: a search component that discovers one or more computing devices that are physically remote from the vehicle but that are within electronic communication range of the vehicle; and a control component that establishes a first remote control link between the vehicle and a first computing device of the one or more computing devices, such that steering, accelerating, or braking of the vehicle are operated autonomously or by a physical driver prior to establishment of the first remote control link, and such that the steering, accelerating, or braking of the vehicle are remotely operated by the first computing device after establishment of the first remote control link.

CLAUSE 2: The system of any preceding clause, wherein the steering, accelerating, or braking of the vehicle are operated by the physical driver prior to establishment of the first remote control link, and wherein the control component establishes the first remote control link in response to selection of an autonomous driving mode of the vehicle by the physical driver.

CLAUSE 3: The system of any preceding clause, wherein the steering, accelerating, or braking of the vehicle are operated by the physical driver prior to establishment of the first remote control link, and wherein the control component establishes the first remote control link in response to the vehicle deviating from a defined travel route.

CLAUSE 4: The system of any preceding clause, wherein the steering, accelerating, or braking of the vehicle are operated by the physical driver prior to establishment of the first remote control link, and wherein the control component establishes the first remote control link in response to detection of a health emergency of the physical driver.

CLAUSE 5: The system of any preceding clause, wherein the steering, accelerating, or braking of the vehicle are operating autonomously prior to establishment of the first remote control link, and wherein the control component establishes the first remote control link in response to detection of an unexpected road condition encountered by the vehicle.

CLAUSE 6: The system of any preceding clause, wherein the control component monitors a signal strength of the first remote control link, and wherein the control component generates an electronic alert in response to the signal strength of the first remote control link falling below a threshold.

CLAUSE 7: The system of any preceding clause, wherein the control component monitors a signal strength of the first remote control link, and wherein the control component causes the vehicle to enter a caution mode in response to the signal strength of the first remote control link falling below a threshold, wherein the caution mode includes reducing speed of the vehicle, increasing following distance of the vehicle, or diverting power in the vehicle to the first remote control link.

CLAUSE 8: The system of any preceding clause, wherein the control component monitors a signal strength of the first remote control link, wherein: in response to the signal strength being below a first threshold, the control component prepares, as a redundant backup, a second remote control link between the vehicle and a second computing device of the one or more computing devices, without terminating the first remote control link; and in response to the signal strength being below a second threshold that is less than the first threshold, the control component establishes the second remote control link and terminates the first remote control link.

In various cases, any suitable combination or combinations of clauses 1 to 8 can be implemented.

CLAUSE 9: A computer-implemented method, comprising: discovering, by a device operatively coupled to a processor and onboard a vehicle, one or more computing devices that are physically remote from the vehicle but that are within electronic communication range of the vehicle; and establishing, by the device, a first remote control link between the vehicle and a first computing device of the one or more computing devices, such that steering, accelerating, or braking of the vehicle are operated autonomously or by a physical driver prior to establishment of the first remote control link, and such that the steering, accelerating, or braking of the vehicle are remotely operated by the first computing device after establishment of the first remote control link.

CLAUSE 10: The computer-implemented method of any preceding clause, wherein the steering, accelerating, or braking of the vehicle are operated by the physical driver prior to establishment of the first remote control link, and wherein the device establishes the first remote control link in response to selection of an autonomous driving mode of the vehicle by the physical driver.

CLAUSE 11: The computer-implemented method of any preceding clause, wherein the steering, accelerating, or braking of the vehicle are operated by the physical driver prior to establishment of the first remote control link, and wherein the device establishes the first remote control link in response to the vehicle deviating from a defined travel route.

CLAUSE 12: The computer-implemented method of any preceding clause, wherein the steering, accelerating, or braking of the vehicle are operated by the physical driver prior to establishment of the first remote control link, and wherein the device establishes the first remote control link in response to detection of a health emergency of the physical driver.

CLAUSE 13: The computer-implemented method of any preceding clause, wherein the steering, accelerating, or braking of the vehicle are operating autonomously prior to establishment of the first remote control link, and wherein the device establishes the first remote control link in response to detection of an unexpected road condition encountered by the vehicle.

CLAUSE 14: The computer-implemented method of any preceding clause, further comprising: monitoring, by the device, a signal strength of the first remote control link; and generating, by the device, an electronic alert in response to the signal strength of the first remote control link falling below a threshold.

CLAUSE 15: The computer-implemented method of any preceding clause, further comprising: monitoring, by the device, a signal strength of the first remote control link; and causing, by the device, the vehicle to enter a caution mode in response to the signal strength of the first remote control link falling below a threshold, wherein the caution mode includes reducing speed of the vehicle, increasing following distance of the vehicle, or diverting power in the vehicle to the first remote control link.

CLAUSE 16: The computer-implemented method of any preceding clause, further comprising: monitoring, by the device, a signal strength of the first remote control link; in response to the signal strength being below a first threshold, preparing, by the device and as a redundant backup, a second remote control link between the vehicle and a second computing device of the one or more computing devices, without terminating the first remote control link; and in response to the signal strength being below a second threshold that is less than the first threshold, establishing, by the device, the second remote control link and terminating the first remote control link.

In various cases, any suitable combination or combinations of clauses 9 to 16 can be implemented.

CLAUSE 17: A computer program product for facilitating semi-autonomous or pseudo-autonomous driving, the computer program product comprising a non-transitory computer-readable memory having program instructions embodied therewith, wherein the program instructions are executable by a processor onboard a vehicle, and wherein execution of the program instructions causes the processor to: discover one or more computing devices that are physically remote from the vehicle but that are within electronic communication range of the vehicle; and establish a first remote control link between the vehicle and a first computing device of the one or more computing devices, such that steering, accelerating, or braking of the vehicle are operated autonomously or by a physical driver prior to establishment of the first remote control link, and such that the steering, accelerating, or braking of the vehicle are remotely operated by the first computing device after establishment of the first remote control link.

CLAUSE 18: The computer program product of any preceding clause, wherein the steering, accelerating, or braking of the vehicle are operated by the physical driver prior to establishment of the first remote control link, and wherein the processor establishes the first remote control link in response to selection of an autonomous driving mode of the vehicle by the physical driver.

CLAUSE 19: The computer program product of any preceding clause, wherein the steering, accelerating, or braking of the vehicle are operated by the physical driver prior to establishment of the first remote control link, and wherein the processor establishes the first remote control link in response to the vehicle deviating from a defined travel route.

CLAUSE 20: The computer program product of any preceding clause, wherein the steering, accelerating, or braking of the vehicle are operated by the physical driver prior to establishment of the first remote control link, and wherein the processor establishes the first remote control link in response to detection of a health emergency of the physical driver.

In various cases, any suitable combination or combinations of clauses 17 to 20 can be implemented.

In various cases, any suitable combination or combinations of clauses 1 to 20 can be implemented.

## Claims

1. A system, comprising:
a vehicle; and
a processor onboard the vehicle and that executes computer-executable components stored in a non-transitory computer-readable memory onboard the vehicle, the computer-executable components comprising:
a search component that discovers one or more computing devices that are physically remote from the vehicle but that are within electronic communication range of the vehicle; and
a control component that establishes a first remote control link between the vehicle and a first computing device of the one or more computing devices, such that steering, accelerating, or braking of the vehicle are operated autonomously or by a physical driver prior to establishment of the first remote control link, and such that the steering, accelerating, or braking of the vehicle are remotely operated by the first computing device after establishment of the first remote control link.

2. The system of claim 1, wherein the steering, accelerating, or braking of the vehicle are operated by the physical driver prior to establishment of the first remote control link, and wherein the control component establishes the first remote control link in response to selection of an autonomous driving mode of the vehicle by the physical driver.

3. The system of claim 1, wherein the steering, accelerating, or braking of the vehicle are operated by the physical driver prior to establishment of the first remote control link, and wherein the control component establishes the first remote control link in response to the vehicle deviating from a defined travel route.

4. The system of claim 1, wherein the steering, accelerating, or braking of the vehicle are operated by the physical driver prior to establishment of the first remote control link, and wherein the control component establishes the first remote control link in response to detection of a health emergency of the physical driver.

5. The system of claim 1, wherein the steering, accelerating, or braking of the vehicle are operating autonomously prior to establishment of the first remote control link, and wherein the control component establishes the first remote control link in response to detection of an unexpected road condition encountered by the vehicle.

6. The system of claim 1, wherein the control component monitors a signal strength of the first remote control link, and wherein the control component generates an electronic alert in response to the signal strength of the first remote control link falling below a threshold.

7. The system of claim 1, wherein the control component monitors a signal strength of the first remote control link, and wherein the control component causes the vehicle to enter a caution mode in response to the signal strength of the first remote control link falling below a threshold, wherein the caution mode includes reducing speed of the vehicle, increasing following distance of the vehicle, or diverting power in the vehicle to the first remote control link.

8. The system of claim 1, wherein the control component monitors a signal strength of the first remote control link, wherein:
in response to the signal strength being below a first threshold, the control component prepares, as a redundant backup, a second remote control link between the vehicle and a second computing device of the one or more computing devices, without terminating the first remote control link; and
in response to the signal strength being below a second threshold that is less than the first threshold, the control component establishes the second remote control link and terminates the first remote control link.

9. A computer-implemented method, comprising:
discovering, by a device operatively coupled to a processor and onboard a vehicle, one or more computing devices that are physically remote from the vehicle but that are within electronic communication range of the vehicle; and
establishing, by the device, a first remote control link between the vehicle and a first computing device of the one or more computing devices, such that steering, accelerating, or braking of the vehicle are operated autonomously or by a physical driver prior to establishment of the first remote control link, and such that the steering, accelerating, or braking of the vehicle are remotely operated by the first computing device after establishment of the first remote control link.

10. The computer-implemented method of claim 9, wherein the steering, accelerating, or braking of the vehicle are operated by the physical driver prior to establishment of the first remote control link, and wherein the device establishes the first remote control link in response to selection of an autonomous driving mode of the vehicle by the physical driver.

11. The computer-implemented method of claim 9, wherein the steering, accelerating, or braking of the vehicle are operated by the physical driver prior to establishment of the first remote control link, and wherein the device establishes the first remote control link in response to the vehicle deviating from a defined travel route.

12. The computer-implemented method of claim 9, wherein the steering, accelerating, or braking of the vehicle are operated by the physical driver prior to establishment of the first remote control link, and wherein the device establishes the first remote control link in response to detection of a health emergency of the physical driver.

13. The computer-implemented method of claim 9, wherein the steering, accelerating, or braking of the vehicle are operating autonomously prior to establishment of the first remote control link, and wherein the device establishes the first remote control link in response to detection of an unexpected road condition encountered by the vehicle.

14. The computer-implemented method of claim 9, further comprising:
monitoring, by the device, a signal strength of the first remote control link;
in response to the signal strength being below a first threshold, preparing, by the device and as a redundant backup, a second remote control link between the vehicle and a second computing device of the one or more computing devices, without terminating the first remote control link; and
in response to the signal strength being below a second threshold that is less than the first threshold, establishing, by the device, the second remote control link and terminating the first remote control link.

15. A computer program product for facilitating semi-autonomous or pseudo-autonomous driving, the computer program product comprising a non-transitory computer-readable memory having program instructions embodied therewith, wherein the program instructions are executable by a processor onboard a vehicle, and wherein execution of the program instructions causes the processor to:
discover one or more computing devices that are physically remote from the vehicle but that are within electronic communication range of the vehicle; and
establish a first remote control link between the vehicle and a first computing device of the one or more computing devices, such that steering, accelerating, or braking of the vehicle are operated autonomously or by a physical driver prior to establishment of the first remote control link, and such that the steering, accelerating, or braking of the vehicle are remotely operated by the first computing device after establishment of the first remote control link.
